# EUROPEAN PATENT SPECIFICATION

(11) **EP 3 091 849 B1**
(45) Date of publication and mention of the grant of the patent: **07.02.2018**
(21) Application number: 14815359.6
(22) Date of filing: 18.12.2014
(51) Int. Cl.: A23K 50/10

(54) **METHOD TO PROTECT LIPOPHILIC NUTRIENTS AGAINST RUMINAL DEGRADATION**
VERFAHREN ZUM SCHUTZ VON LIPOPHILEN NÄHRSTOFFEN GEGEN RUMINALEN ABBAU
PROCÉDÉ POUR PROTÉGER DES NUTRIMENTS LIPOPHILES CONTRE LA DÉGRADATION RUMINALE

(30) Priority: 20.12.2013 EP 13199069; 16.06.2014 EP 14172565
(43) Date of publication of application: 16.11.2016
(73) Proprietor: Universiteit Gent, 9000 Gent (BE)
(72) Inventor: FIEVEZ, Veerle, B-9040 Sint-Amandsberg (BE); GADEYNE, Frederik, B-8680 Koekelare (BE); VAN RANST, Gijs, B-9200 Grembergen (BE)
(86) International application number: PCT/EP2014/078525
(87) International publication number: WO 2015/091840

(56) References cited:
- VAN RANST G ET AL: "Red clover polyphenol oxidase and lipid metabolism.", February 2011 (2011-02), ANIMAL : AN INTERNATIONAL JOURNAL OF ANIMAL BIOSCIENCE FEB 2011, VOL. 5, NR. 4, PAGE(S) 512 - 521, XP002723475, ISSN: 1751-732X cited in the application pages 512,519
- LEE MICHAEL R F ET AL: "Immunogold labelling to localize polyphenol oxidase (PPO) during wilting of red clover leaf tissue and the effect of removing cellular matrices on PPO protection of glycerol-based lipid in the rumen.", February 2010 (2010-02), JOURNAL OF THE SCIENCE OF FOOD AND AGRICULTURE FEB 2010, VOL. 90, NR. 3, PAGE(S) 503 - 510, XP002723476, ISSN: 1097-0010 pages 503,509
- VAN RANST G ET AL: "Influence of damaging and wilting red clover on lipid metabolism during ensiling and in vitro rumen incubation.", September 2010 (2010-09), ANIMAL : AN INTERNATIONAL JOURNAL OF ANIMAL BIOSCIENCE SEP 2010, VOL. 4, NR. 9, PAGE(S) 1528 - 1540, XP002723477, ISSN: 1751-732X page 1528 page 1539
- PARVEEN IFAT ET AL: "Oxidative phenols in forage crops containing polyphenol oxidase enzymes.", 10 February 2010 (2010-02-10), JOURNAL OF AGRICULTURAL AND FOOD CHEMISTRY 10 FEB 2010, VOL. 58, NR. 3, PAGE(S) 1371 - 1382, XP002723478, ISSN: 1520-5118 the whole document

## Description

### Technical field of invention

The present invention relates to the field of increasing the duodenal flow and absorption of lipophilic nutrients -such as poly-unsaturated fatty acids- enhancing their content in animal products such as meat and milk. This increase is suggested to ameliorate both the health of humans consuming the animal products and the animals themselves. More specifically, the present invention relates to a process to prepare an oil in water emulsion of droplets of lipophilic nutrients encapsulated by a protein-phenol matrix. The formation of said protein-phenol matrix requires both the presence of polyphenol oxidases extracted from specific plants and the addition of a diphenol. The latter emulsion - when given as feed- protects lipophilic nutrients against degradation by microbes present in the rumen of animals so that these non-degraded nutrients can be transferred further in the animal's body. In addition, the latter emulsion may also be used to protect lipophilic nutrients against deterioration during storage or processing (e.g. due to oxidation).

### Background art

Rumen microbes provide ruminants with the unique ability to utilize structural carbohydrates and non-protein-nitrogen. However, this symbiosis of micro-organisms and ruminants also leads to degradation of lipophilic nutrients, such as some vitamins and polyunsaturated fatty acids (PUFA), in the rumen so that these are no longer available for absorption. This inefficient utilization of high-quality nutrients can have adverse effects on the health of ruminants and can deteriorate quality of animal products. Accordingly, administration of rumen-protected (also referred to as rumen bypass) nutrients has been envisaged.

Because of their health benefits for both humans and animals, several technologies attempted to protect (n-3) PUFA from biohydrogenation (= saturation) in the rumen. Protection technologies rely on e.g. embedding oil droplets in a formaldehyde cross-linked protein matrix⁽¹⁾, use of composite gels⁽²⁾, formation of Ca-soaps⁽²⁾ or amides⁽²⁾, non-enzymatic browning⁽²⁾ or encapsulation in triacylglycerides (US 6,013,286). However, each of these technologies show serious short-comings, related to protection efficacy, use of noxious substances and/or limitations of processing. Indeed, one of the most efficient technologies to protect oils against rumen biohydrogenation is embedding oil droplets in a protein matrix followed by a formaldehyde treatment⁽¹⁾. Here, a complex is formed between formaldehyde and amino acids in the protein matrix, resulting in a protective shell (US 3,925,560). It has been shown that it is possible to increase several lipophilic nutrient levels in milk fat using formaldehyde-treated emulsified oils rich in these fatty acids^{(3;4)}. However, formaldehyde is a noxious product and use of it in the EU is subject to strict regulations (2011/391/EU).

Alternative technologies, as mentioned above, to by-pass PUFA exist, like calcium soaps, amide formation or 'composite gels' (US 2004/0058003). However, these technologies are not efficient. For example, the production of the composite gel - consisting of 1) a dispersed phase of lipid droplets and 2) cross-linked proteins in the continuous (aqueous) phase of the gel - requires a heating step for about 20 to 80 minutes at 80 to 125°C. This heating step can give rise to oxidation of the compounds in the composite gel. The oxidation products of some feed supplements are known to be toxic. It is thus a major disadvantage to use heat during a production process, before the nutrients are encapsulated. Another technology most commonly used today is the encapsulation of nutrients in a lipid matrix (US 6,013,286 and Robinson et al.⁽⁵⁾). However, this lipid matrix might show limited resistance against technological processing such as e.g. pelleting, expansion and extrusion⁽⁶⁾.

In red clover a natural mechanism has been described based on polyphenol oxidase (PPO) that is capable of protecting membrane fatty acids present in the chloroplast (Van Ranst et al.⁽⁷⁾). High PPO activity was suggested to be essential in this respect (Van Ranst et al.⁽⁷⁾). PPO is a phenol and diphenol oxidising enzyme, resulting in the formation of quinones. The latter authors conclude that encapsulation in protein-phenol complexes, induced by PPO-mediated diphenol oxidation, could be effective to protect lipids present in plant membranes against pre-ruminal and ruminal degradation. Parveen et al.²⁰ disclose a number of phenols identified in several forage grass, legume, cereal or brassica species which may be oxidized as a consequence of PPO activity. It is however unknown whether there exists any correlation between the degree of PPO activity versus a particular (di)phenol (or substrate) and the degree of protection of lipohilic nutrients against degradation! The effect of PPO on the reduction of proteolysis and lipolysis has also been discussed by Lee et al.⁽²⁵⁾.

### Brief description of figures

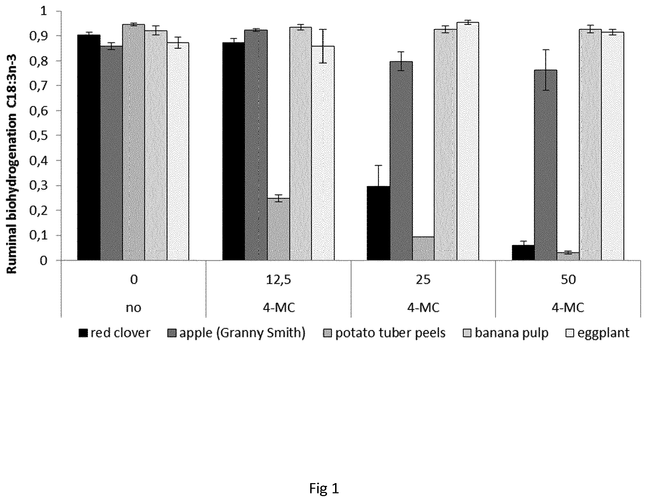

Figure 1: Ruminal biohydrogenation of C18:3n-3 in linseed oil-in-water emulsions using PPO-rich protein extracts from different plant sources at different concentrations of 4-methylcatechol (0, 12.5, 25 or 50 mM) as diphenolic agent after 24h in vitro incubation

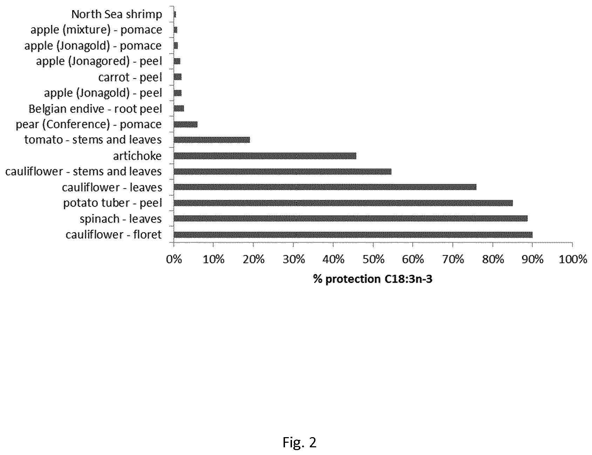

Figure 2: Ruminal biohydrogenation of C18:3n-3 after 24h in vitro incubation using PPO-rich protein extracts from different plant sources and 40 mM. 4-methylcatechol as diphenolic agent

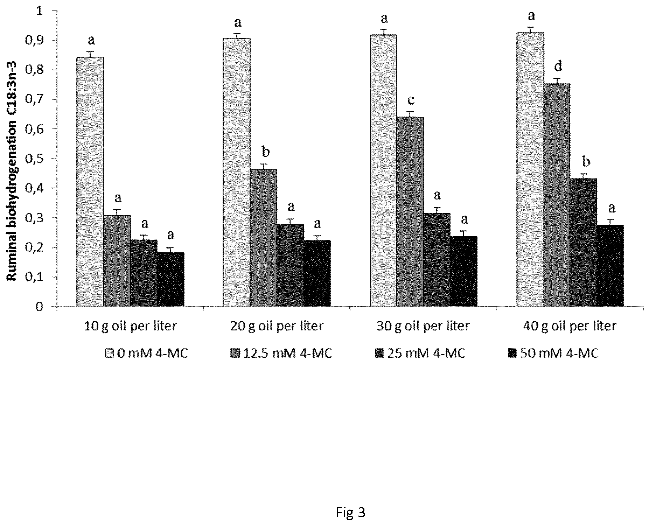

Figure 3: Biohydrogenation of C18:3n-3 after batch in vitro incubation for 24h is influenced by oil and diphenol concentrations. Emulsions of example 2 (prepared by passing 5 times through a microfluidizer at 25 MPa) used a red clover protein extract as emulsifier and contain 4 different oil concentrations (10, 20, 30 or 40 g oil per liter protein extract), different levels of extra casein (0, 1 or 2 g extra casein per liter protein extract; averages presented) and different diphenol concentrations (0, 12.5, 25 or 50 mM 4-methylcatechol). Error bars represent the standard error of the mean. ^{a,b,c,d} indicates differences in biohydrogenation between oil concentration within 4-methylcatechol concentration at p≤0.05 (n=3)

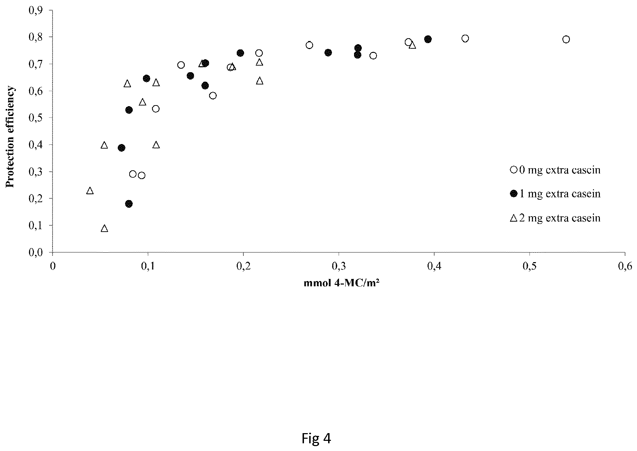

Figure 4: Protection efficiencies increased with increasing amounts of 4-methylcatechol per unit of interfacial surface area in linseed oil-in-water emulsions (mmol 4-methylcatechol/m²) according to a logarithmic curve, reaching a plateau once more than 0.25 mmol 4-MC is available in the system per square meter surface area present in the emulsion. Emulsions were prepared as described in Figure 3.

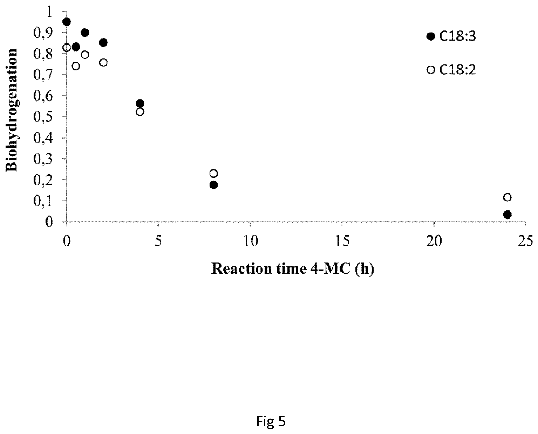

Figure 5: An increased time between the addition of 4-methylcatechol to red clover based linseed oil-in-water emulsions (prepared by passing 5 times through a microfluidizer at 25 MPa) and PPO inactivation using 4-hexylresorcinol results in a decrease of biohydrogenation of C18:2*n-6* and C18:3*n-3* after 24h in vitro incubation

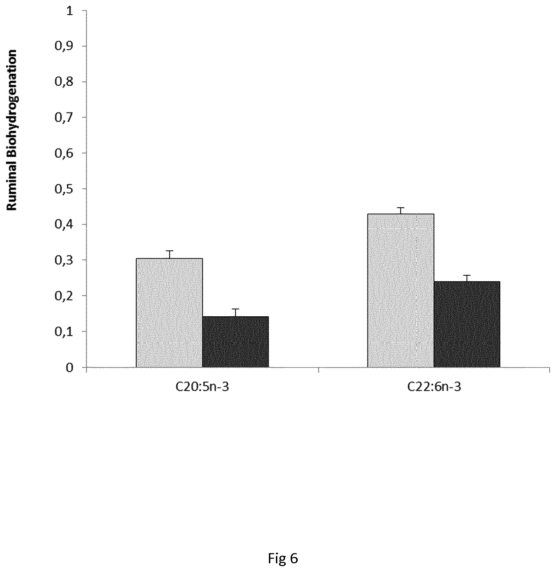

Figure 6: Ruminal biohydrogenation of C20:5n-3 and C22:6n-3 in fish oil-in-water emulsions using a PPO-rich protein extract from red clover and 4-methylcatechol (0 or 20 mM) as diphenolic agent after 24h in vitro incubation (grey bars represent no addition of 4-methylcatechol, black bars represent emulsions having a final concentration of 20mM 4-methylcatechol, error bars represent the standard error of the mean (n=3))

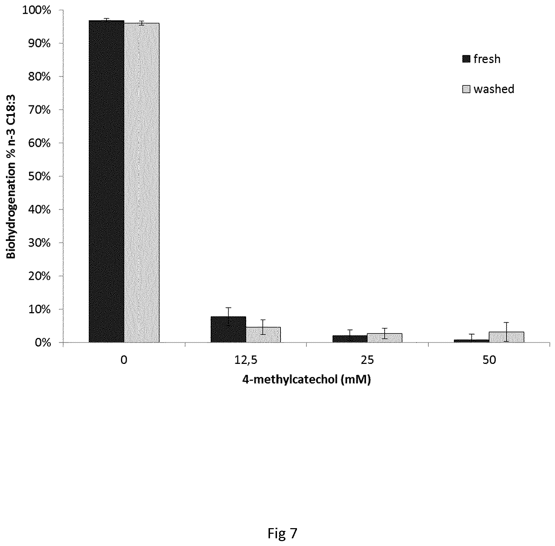

Figure 7: Ruminal biohydrogenation of C18:3n-3 in 2% (w/v) fresh or washed linseed oil-in-water emulsions using a PPO-rich protein extract from red clover at different concentrations of 4-methylcatechol (0, 12.5, 25 or 50 mM) as diphenolic agent after 24h in vitro incubation

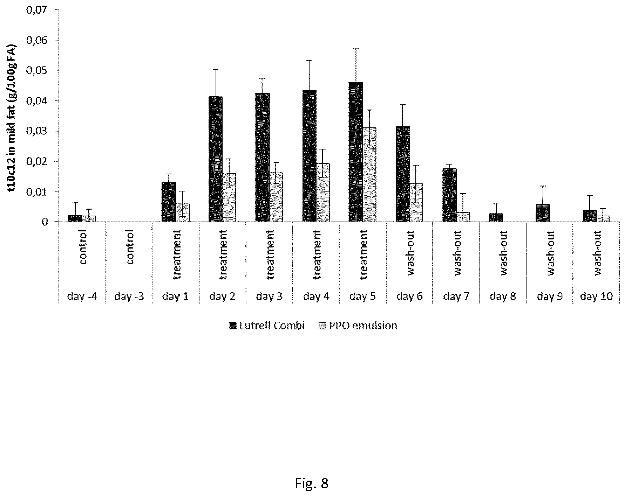

Figure 8: An increase in milk trans-10, cis-12 conjugated linoleic acid concentration (g per 100 g detected fatty acids) is observed for both Lutrell Combi and PPO emulsion (containing the previously mentioned fatty acid and protected using potato tuber peel protein extracts and 20 mM 4-methylcatechol) upon supplementation for five consecutive days (day 1 to 5), followed by declining concentrations in the washout period (day 6 to 10). Error bars represent standard deviations (n=4 dairy cows)

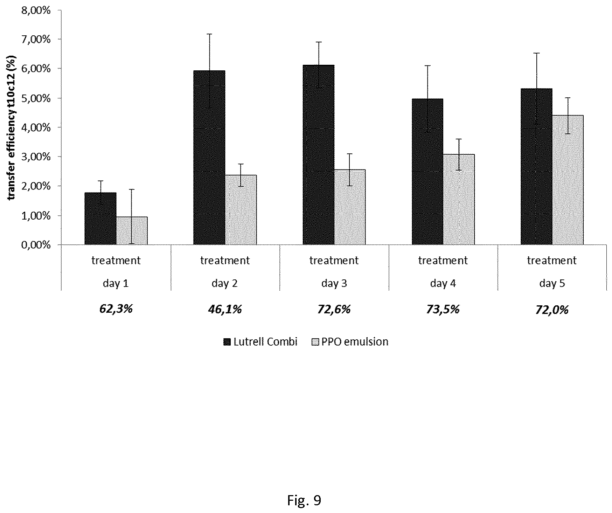

Figure 9: An increase in transfer efficiency of dietary trans-10, cis-12 conjugated linoleic acid to the milk is observed for both Lutrell Combi and PPO emulsion (containing the previously mentioned fatty acid and protected using potato tuber peel protein extracts and 20 mM 4-methylcatechol) upon supplementation of 7 g trans-10, cis-12 conjugated linoleic acid for five consecutive days to four dairy cows. Error bars represent standard deviations (n=4). Values in bold italic shown under the treatment days represent in vitro rumen protection efficiencies of the PPO emulsion batch supplemented at the corresponding treatment day.

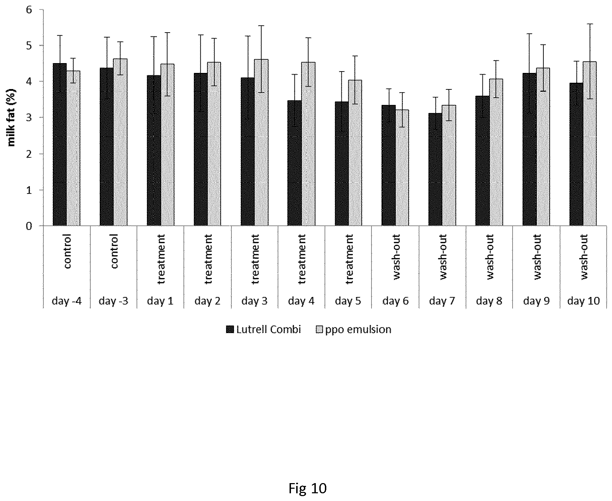

Figure 10: A decrease in milk fat percentage is observed for both Lutrell Combi and PPO emulsion (containing trans-10, cis-12 conjugated linoleic acid and protected using potato tuber peel protein extracts and 20 mM 4-methylcatechol) upon supplementation for five consecutive days (day 1 to 5), followed by increasing concentrations in the washout period (day 6 to 10) up to regular levels. Error bars represent standard deviations (n=4 dairy cows)

### Description of invention

The present invention relates to the surprising findings that: 1) it is possible to protect lipophilic nutrients against degradation via emulsifying said nutrients within a protein solution wherein part of said proteins have PPO activity, and 2) there exist no correlation between PPO activity measured in protein extracts from plants and extent of degradation. Hence, and besides extracts of red clover, only extracts from a specific selection of plants or plant parts can be used to protect lipophilic nutrients against degradation. For example, the present invention demonstrates that some plant species having a comparable PPO activity to the PPO activity of red clover (such as *Solanum melongena* L. or Eggplant, or, *Musa acuminate* Colla AAA group cv. Grand Nain or banana, or, *Pyrus communis* or pear) have no or very limited protective effect against degradation whereas other plant species having a comparable (such as *Solanum tuberosum* L. or potato) or considerably lower (such as *Brassica oleracea* L. varieties such as e.g. cauliflower or broccoli) PPO activity to the PPO activity of red clover do have such an effect. Nevertheless, some PPO activity is required as emulsifying nutrients within a protein solution without PPO activity (such as casein) in the presence of a diphenolic substrate (such as 4-methylcathechol) did not protect against degradation.

The present thus relates in first instance to methods to protect lipophilic nutrients against degradation based on the usage of polyphenol oxidase-containing proteins extracted from a specific selection of plants/plant species. The term 'degradation' refers in first instance to ruminal degradation due to intensive microbial metabolism in the rumen such as hydrolysis (incl. lipolysis), biohydrogenation and fermentation but also to degradation during conservation of lipophilic nutrients such as -but not limited to- lipolysis and oxidation.

More specifically the present invention relates to methods to protect a lipophilic nutrient against ruminal degradation comprising:
- preparing a solution of emulsifying proteins wherein part of said proteins have polyphenol oxidase activity,
- adding said lipophilic nutrient to said solution of emulsifying proteins,
- emulsifying said lipophilic nutrient within said protein solution to obtain a stable oil in water emulsion, and
- adding an amount of diphenol to said emulsion in the presence of molecular oxygen,
wherein said emulsifying proteins are extracted from plants, or parts thereof, chosen from the list of the following species: *Solanum tuberosum* L., *Solanum lycopersicum* L., *Cynara scolymus* L. , *Spinacia oleracea* L. and *Brassica oleracea* L. species.

In an alternative embodiment of the latter method said diphenol may be added to said solution of emulsifying proteins before said lipophilic nutrients are emulsified within said protein solution.

The term 'lipophilic nutrient' refers to any lipophilic chemical used in an organism's metabolism which must be taken in from its environment. The term 'lipophilic' refers to the ability of said nutrient to dissolve in glycerides (such as fats and oils), and non-polar solvents such as hexane or toluene. These non-polar solvents are themselves lipophilic. Thus lipophilic nutrients dissolve in other lipophilic substances or chemicals, while hydrophilic nutrients tend to dissolve in water and other hydrophilic substances or chemicals. The term lipophilic nutrients refers to any oil or fat derived from plants or animals, or which is obtained via chemical processes. More specifically, the term lipohilic nutrients refers to an oil such as -but not limited to-linseed oil, fish oil or an oil comprised of glycerides containing typically 80% conjugated linoleic acid and derived from safflower oil (such as TONALIN™ TG80 from BASF) or to a fat soluble vitamin such as -but not limited to- vitamin A, D or E. The term 'lipophilic nutrient' may also -for example- relate to any omega-3 and/or omega-6 and/or omega-9 and/or conjugated polyunsaturated (glycerol-bound) fatty acids, plant secondary metabolites such as thymol and the like.

The terms 'preparing a solution of emulsifying proteins' relates in essence to any method known in the art to firstly extract proteins from a specific plant and to secondly dissolve said proteins in an appropriate solvent, such as phosphate buffer, in order to obtain a homogeneous mixture composed of only one phase. A non-limiting example of 'preparing a solution of emulsifying proteins' could rely on the method for protein extraction to assess PPO activity as described by Van Ranst et al.⁽⁸⁾ and comprises: harvesting an appropriate amount of specific plant material, mixing said plant material with a buffer, ascorbic acid (ascorbic acid prevents polyphenol oxidase activity) and a compound capable to capture phenols such as for example polyvinylpolypirrolidone (pvp) via a blender to obtain a mixture, filtrating and centrifuging the latter mixture to obtain a supernatant, adding acetone to said supernatant and keeping the solution obtained as such for at least 35 min at a temperature of about -18°C, centrifuging said solution to obtain a pellet, and, redissolving said pellet in an appropriate buffer. Other methods to prepare a solution of emulsifying proteins known to a skilled person may be used as well.

The terms 'proteins wherein part of said proteins have polyphenol oxidase activity' relates to a protein extract from specific plants as described above wherein polyphenol oxidase activity is present due to the presence of polyphenol oxidases (PPO). PPO's are a widespread group of enzymes including tyrosinases and catechol oxidase present in plants but also in animals and fungi. PPO's have a dinuclear copper centre and catalyse the insertion of molecular oxygen in the ortho-position to an existing hydroxyl group in phenols resulting in an ortho-diphenol and its further oxidation to a quinone. The resultant quinones will readily react with nucleophiles such as certain amino acids and phenolic structures. PPO activity in plant material can be measured spectrophotometrically in a protein extract from plants. Hence a protein extract can be obtained as described above and may be followed by a protein purification step using for example a desalting column or protein precipitation as described above. Activity may then be measured spectrophotometrically in a buffer using a substrate such as 4-methyl catechol. Increase in absorbance per unit time is measured for the PPO activity in the protein extract and is reported as a change in optical density or unit of enzyme activity (see also Van Ranst et al.⁽⁸⁾ and Van Ranst et al.⁽⁷⁾). A detailed -but non-limiting- method to measure PPO activity is given further in the examples section. Other methods to measure PPO activity known to a skilled person may be used as well.

The terms 'adding said lipophilic nutrient to said solution of emulsifying proteins and emulsifying said lipophilic nutrient within said protein solution to obtain a stable oil in water emulsion' relates in essence to any method known in the art to obtain a stable oil in water emulsion. For example, an appropriate amount such as 20 g of a lipophilic nutrient can be added per liter of above described plant extract and can be homogenized using a homogenizer such as a high speed Ultraturrax^{R} as described in the examples section. The as such obtained emulsion can then be passed (about 5 times) to a microfluidizer in order to create a stable emulsion with small droplet sizes.

Processing of homogenized emulsions may occur at compressed air pressure of about 1.8 MPa or less and under cooling conditions as for example described in the examples section. Other methods to emulsify known to a skilled person may be used as well such as adding said diphenol to solution of emulsifying proteins before said lipophilic nutrients are emulsified within said protein solution.

The droplet size of the droplets within said oil in water emulsion be in some instances smaller than -or equal to- 2 µm (i.e. 2, 1, 0.5, 0.1...or less µm). However, larger droplet sizes (e.g. of about 10 µm) can be obtained as well as long as the emulsion is stable! Particle size distribution with said stable emulsions can be checked using a Mastersizer S^{R} (Malvern Instruments) equipped with a 300RF lens or using any other method or apparatus. Samples can be added to the dispersion unit until an obscuration level of 10 to 15 % is reached and data can be analysed using the polydisperse model. Droplet sizes are characterized in terms of surface or volume-weighted mean diameter in µm.

The terms 'adding an amount of diphenol to said emulsion in the presence of molecular oxygen' refers to adding any diphenol solution in -for example- distilled water that is added in the presence of oxygen to said emulsions in order, via shaking the emulsion mixtures for about 24 h at room temperature, to induce protein-phenol complexing and/or to reach a concentration of about 9/1 emulsion/diphenol solution. Emulsions can have a final concentration of about 20 mM of diphenol. The latter diphenol can be a synthetic diphenol such as 4-methylcatechol, caffeic acid, chlorogenic acid or any other diphenol.

As mentioned before, the present invention relates to the surprising finding that there exist no correlation between PPO activity measured in protein extracts from plants and extent of rumen protection. Hence, and besides extracts of red clover as suggested by Van Ranst et al.⁽⁷⁾, only extracts from a specific selection of plants or plant parts can be used to protect lipophilic nutrients against degradation. This specific selection of plants, or parts thereof such as -but not limited to- roots, tubers, leaves, stems, flowers, peels, fruits, pits, pods, tissues, pomaces..., specifically relates to the list of the following species: *Solanum tuberosum* L. (potato), *Solanum lycopersicum* L. (tomato), *Cynara scolymus* L. (artichoke), *Spinacia oleracea* L. (spinach) and Brassica species (cruciferous vegetables, cabbages or mustards) such as *Brassica oleracea* L. (cauliflower, broccoli, Brussels sprout, cabbage... ). The term 'species' encompasses any lower taxonomic rank than species such as subspecies, variety, cultivar and the like of any of said species.

Hence, the present invention further relates to a method as described above wherein said plants or parts thereof are potato tuber peels, tomato plant stems and/or leaves, cauliflower stems, leaves and florets and spinach leaves.

The present invention also relates to a method as described above wherein said lipophilic nutrient is an oil or a fat soluble vitamin.

More specifically, the present invention relates to a method as described above wherein said oil is an oil comprising polyunsaturated fatty acids or wherein said vitamin is vitamin A, vitamin D or vitamin E, and/or, wherein said oil comprising polyunsaturated fatty acids is linseed oil, fish oil or an oil comprised of glycerides containing conjugated linoleic acid.

The present invention further relates to a method as described above wherein said diphenol is 4-methylcatechol.

The present invention also specifically relates to a method as described above wherein said oil in water emulsion is stable. Emulsion stability refers to the ability of an emulsion to resist change in its properties over time. An emulsion is stable when the size of the droplets (i.e. for example 2 to 10 µm) does not change significantly with time. There are four types of instability in emulsions: flocculation, creaming, coalescence and Ostwald ripening. Flocculation occurs when there is an attractive force between the droplets, so they form flocs, like bunches of grapes. Coalescence occurs when droplets bump into each other and combine to form a larger droplet, so the average droplet size increases over time. Emulsions can also undergo creaming, where the droplets rise to the top of the emulsion under the influence of buoyancy, or under the influence of the centripetal force induced when a centrifuge is used.

Although the amount of diphenol added will depend on the size of the droplets within said oil in water emulsion and/or on of the amount of oil, the present invention also relates to a method as described above wherein said amount of diphenol is minimum 0.25 mmol per m² of interfacial surface area of the droplets within said oil in water emulsion .

The present invention relates to methods to protect a lipophilic nutrient against ruminal degradation. Assessment of protection against ruminal biohydrogenation can be performed via in vitro batch incubations to evaluate the protection of poly-unsaturated fatty acids (PUFA). Therefore, an above described emulsion, for example hay as substrate for the bacteria, buffer solution and rumen fluid collected from e.g. rumen fistulated sheep can be added in an incubation flask under anaerobic conditions. Incubation follows during about 24 h at about 39°C under intermittent shaking in order to allow microbial activity and hence biohydrogenation. The amount of biohydrogenated fatty acids can be analysed using gas chromatography or any other method and calculated as for example indicated in the Examples section.

Assessment of protection against ruminal biohydrogenation can also be performed in vivo. For example, emulsions of the present invention can be administered to ruminal animals such as cows or sheep. For example, the latter emulsion may comprise a potato tuber peel-protected (as described above) commercially available glycerides containing a mixture of trans-10, cis-12 conjugated linoleic acid (CLA) and cis-9, trans-11 CLA. The trans-10, cis-12 conjugated linoleic acid is a potent inhibitor of milk fat synthesis even when administered at limited doses of 5 to 10 g/d, but only when it is transferred to the mammary gland which requires adsorption in the small intestine and protection against rumen biohydrogenation. Accordingly, monitoring of a simple characteristic (milk fat content) provides evidence for rumen protection, post-ruminal adsorption and transfer to the mammary gland.

Moreover, the present invention relates to methods as described above to protect a lipophilic nutrient against deterioration due to oxidation or other ways of degradation during storage of said nutrient. The degree of oxidation can for example be measured using both malondialdehyde (MDA) measurements and the measurement of volatile components via e.g. solid phase micro-extraction-gas chromatography/mass spectroscopy (SPME-GC/MS) as for example described by ⁽⁹⁾or by any other method known to skilled person. The degree of vitamine E degradation can be for example determined via HPLC analysis of vitamin E as described further in example 10.

The present invention thus relates to the usage of a protein extract, including PPO, extracted from specific plant tissues as emulsifier and requires the rapid adsorption of the proteins present in this extract at the surface of the lipophilic nutrient droplets and a complete covering of this surface. The latter specifically requires the presence of PPO at the oil-water interface. If not, the PPO-induced conversion of diphenols to quinones and the formation of the protein-phenol capsule at the oil-water interface are hampered and the lipophilic nutrients hardly will be protected against rumen degradation such as biohydrogenation. In order to obtain maximal adsorption of PPO at the oil-water interface, the competition between PPO and other emulsifying agents (such as other proteins) should be as low as possible. Effective adsorption requires some unfolding of the protein, which is typically not the native state of the protein. However, retention of enzyme activity in the adsorbed state implies rather minimal modification to the native structure of the protein. Such (mainly globular) proteins, which undergo very little change in configurational structure upon adsorption are commonly called 'hard' proteins in literature. In contrast to 'soft proteins', the former exhibit little conformational flexibility in the native state, and are held together strongly by intramolecular physical and covalent bonds. The absence of a correlation between the PPO activities measured in protein extracts of various origins and the degree of protection against rumen degeneration/biohydrogenation might be linked to differences in protein structure and/or extent of protein unfolding upon adsorption. Indeed, besides its capacity to oxidize diphenols to quinones, the emulsifying capacity of PPO might be of equivalent importance within the context of the present invention. The latter emulsifying capacity should thus not be in competition with other 'hard proteins' and is of importance when considering to increase the emulsifying capacity by the addition of emulsifying proteins to the protein present in the plant extraction in order to obtain a reduction in droplet size. In this regard, the present invention relates to the surprising finding that casein - a family of related phosphoproteins commonly found in mammalian milk- should not be added in order to further stabilize emulsions.

The present invention thus also relates to methods as described above wherein said solution of emulsifying proteins should not be supplemented with casein or any other protein -such as 'hard' proteins- competing with polyphenol oxidases when adsorbing to the oil-water interface. Examples of 'hard' proteins are β-lactoglobulin, bovine serum albumin, globulines... Examples of 'soft proteins' are caseins.

The present invention further relates to an emulsion comprising diphenol-protected lipophilic nutrients obtainable by any method as describe above. The latter emulsions can indeed be best characterized by the method used to make them. The latter emulsions thus comprise a solvent wherein droplets of a particular size (as indicated above) are present and wherein said droplets are made from lipophilic nutrients surrounded by a capsule of phenol-complexed proteins and wherein said proteins comprise PPO, plant proteins and, optionally, supplemented non-competing 'hard' proteins.

Moreover, the present invention relates to feed comprising any emulsion as described above. The term 'feed' refers to food given to the ruminant animals including -but not limited to- compressed and pelleted feeds, oils and emulsions which comprise, among other items, encapsulated and protected lipophilic nutrients according to the present invention.

The present invention thus also relates to the usage of emulsions as described above or feed as described above to increase the total amount of a lipophilic nutrient in a ruminant's product when compared to amount found in an animal which was not fed with said emulsion or feed, as described above.

The present invention will now be illustrated by the following non-limiting examples.

### Examples

### Example 1a

*In vitro protection against ruminal degradation of linseed oil-in-water emulsions using PPO-rich protein extracts from five different plant sources and four different concentrations of 4-methylcatechol as diphenolic agent*

### Materials and Methods

A three-step process was performed: first, proteins were extracted from a plant source, second, a PUFA rich oil was emulsified using this protein extract and third, creation of protein-phenol complexes was induced by adding a synthetic diphenol: First, for the protein extract, different plant sources were used: red clover (*Trifolium pratense* L. cv. Lemmon), potato tuber peels (*Solanum tuberosum* L.), apple (*Malus domestica* Mill cv. Granny Smith), banana pulp (*Musa acuminate* Colla AAA group cv. Grand Nain) and eggplant (*Solanum melongena* L.), Plant material was collected on field or when not available bought in a local grocery store. Material was frozen at - 80°C immediately after harvest or cutting in pieces. In short, about 150 g of frozen plant material, 500 ml of 0.1 M phosphate buffer with 30 mM ascorbic acid (pH=7.0), 0.5 g Triton X-100 and 1 g polyvinylpolypirrolidone were thoroughly mixed in a blender for 1 min. After filtration and centrifugation (10000×g, 15 min, 4°C), acetone was added to the supernatant until a concentration of 800 ml acetone per liter total volume and kept at -18°C for 35 min. After centrifugation (5000×g, 5 min, 4°C) the pellet was re-dissolved in 400 ml of a 10 mM phosphate buffer (pH=7.0) without ascorbic acid. This concentrated protein extract was used to measure PPO activity and protein content as described by Van Ranst et al.⁽⁸⁾ To determine PPO activity, the absorbance (A) was measured at 400 nm 20, 30 and 40 seconds after addition of 4-methylcatechol. PPO activity was expressed as ΔA/min/mg protein. Folin-Ciocalteau reagent was added to the protein extract with copper and NaK-tartrate and the absorption was measured at 750 nm to determine the protein content, which was expressed as g protein per liter extract. Second, the concentrated protein extract, containing PPO, was used to emulsify linseed oil (rich in linoleic acid (C18:2n-6) and α-linolenic acid (C18:3n-3)). Coarse emulsions were created using a high speed Ultraturrax (T25 Basic, Ika Werke, Staufen, Germany), containing 20 g linseed oil per liter protein extract, which were put into a microfluidizer (M110S, Microfluidics Corporation, Newton, Massachusetts, USA) and passed 5 times to create stable emulsions with small droplet sizes. Ultraturraxed emulsions were processed at a compressed air pressure of 1.8 MPa, which corresponds to a liquid pressure of 25 MPa. During processing, emulsions were cooled by passing through a heat exchanger coil immersed into an ice-water bath. Particle size distributions were checked immediately after preparation using a Mastersizer S (Malvern Instruments, Malvern, UK) equipped with a 300RF lens. The automated sample dispersion unit MS-17 (Malvern Instruments, Malvern, UK) was used. Samples were added to the dispersion unit until an obscuration level of 10 to 15% was reached. Data were analysed using the polydisperse model. Hereby, the real refractive index of the oil was fixed at 1.5295, whereas the imaginary refractive index was assumed to be 0.1000. Droplet sizes were characterized in terms of volume-weighted mean diameter (d₄₃), Sauter surface-weighted mean diameter (d₃₂), median volume-weighted distribution value D[v,0.5] and 90% percentile of the volume-weighted distribution D[v,0.9] using the available software (Malvern Instruments, Malvern, UK). Specific surface areas (in m²/g oil) were calculated based on an assumed oil density ρ of 930 kg/m³ from the Sauter mean diameter: *SSA* = 6/*d*₃₂/*ρ*. Finally, to induce protein-phenol complexing, 10% (v/v) of a 4-methylcatechol solution in distilled water was added to the emulsions to reach a concentration of 9/1 emulsion/diphenol solution. Test emulsions had a final concentration of 0, 12.5, 25 or 50 mM 4-methylcatechol. Emulsion mixtures were shaken for 24 h at room temperature in order to allow PPO activity. Until further analysis, protected emulsions were stored in a refrigerator.

In vitro batch incubations were performed to evaluate the protection of PUFA in the various emulsions against ruminal biohydrogenation. Therefore, 1 ml emulsion, 250 mg hay, 20 ml buffer solution (containing 3.58 g Na₂HPO₄.12H₂0, 1.55 g KH₂PO₄, 0.124 g MgCl₂.6H₂0, 8.74 g NaHCO₃ and 1 g NH₄HCO₃ per liter of distilled water) and 5 ml of rumen fluid were added to 125-ml incubation flasks. Rumen fluid was collected before the morning feeding from three rumen fistulated sheep, which were fed hay ad libitum and had free access to drinking water. Fistulation of the sheep was approved by the ethical commission of the Institute for Agricultural and Fisheries Research (ILVO), Belgium (EC 2009, 114). Rumen contents from the three sheep were combined and filtered through a sieve with a pore size of 1 mm under continuous CO₂ flushing at 39°C. Incubation flasks were thoroughly flushed with CO₂ to obtain anaerobic conditions and incubated under intermittent shaking at 39°C for 24 h using a batch culture incubator (Edmund Bühler GmBH, Hechingen, Germany). After 24 h of in vitro rumen incubation, flasks were removed from the incubator and placed in ice water to stop the microbial activity. After gas analysis⁽¹⁰⁾, pH was measured (Hanna Instruments, Temse, Belgium) and culture contents were sampled for analysis of volatile fatty acids (VFA).⁽¹¹⁾ Results for pH, gas and VFA are not shown, as no differences were observed between treatments within the different experiments and the control treatments, indicating that changes in extent of biohydrogenation were not due to changes in microbial activity. For analysis of long chain fatty acids (FA), 5 ml of incubation fluid was taken and freeze-dried. Each treatment was incubated in triplicate.

Fatty acids of freeze-dried culture content were methylated by a base-catalyzed followed by an acid-catalyzed step. Toluene (2 ml), containing 0.2 mg/ml tridecanoic acid (Sigma, Diegem, Belgium) as an internal standard, was added. Extraction tubes were thoroughly vortexed using a Multi-Tube Vortex (VX-2500, VWR International, Leuven, Belgium) after which methanolic sodium hydroxide was added (2 ml, 0.5 M NaOH dissolved in methanol). Tubes were vortexed, incubated in a warm water bath at 70°C for 1 h and cooled again in an ice bath for 5 min. After addition of methanolic hydrochloric acid (3 ml), prepared by dissolving 10 ml acetyl chloride in 50 ml ice cold methanol, tubes were vortexed and incubated in an air oven at 50°C for 30 min. After cooling down in an ice bath for 5 min, hexane (3 ml) and water saturated with NaHCO₃ (4 ml) was added, vortexed and centrifuged (5 min, 1111×g). The supernatants, containing the methylated fatty acids, were taken off using a Pasteur pipet and filtered over a column containing glass wool, silica gel and active coal, prewashed with hexane. Filtered solvents were evaporated using N₂, re-dissolved in hexane (1 ml) and transferred to GC vials before analysis using gas chromatography. Fatty acids were analysed using a Hewlett-Packard 6890 gas chromatograph (Hewlett-Packard, Brussels, Belgium) with a Solgel-wax column (30m x 0.25mm x 0.25µm; SGE Analytical Science, Victoria, Australia). The temperature program was as follows: 150°C for 2 min; increased at 3°C/min until 250°C; injector temperature: 250°C; detector temperature 280°C. For this temperature program, 2 µl was injected in which the split/splitless ratio was 50:1. Fatty acid peaks were identified based on their retention times, compared to external standards (BR2 and BR3, Larodan Fine Chemicals AB, Malmö, Sweden; Supelco 37, Supelco Analytical, Pennsylvania, USA; PUFA-3, Matreya LLC, Pleasant Gap, Pennsylvania, USA). In vitro rumen biohydrogenation of 18:3n-3 was calculated as [(proportion of 18:3 in total C18 FA)₀ₕ - (proportion of 18:3 in total C18 FA)₂₄ₕ ] / (proportion of 18:3 in total C18 FA)₀ₕ.

### Results

PPO activities, expressed as the increase in absorbance between 20s and 40s after addition of a diphenolic substrate (ΔA/min/mg protein), are presented in Table 1. Potato tuber peels showed a similar PPO activity towards 4-methylcatechol as red clover. Apple and eggplant also showed activity, but activities were smaller. In vitro ruminal biohydrogenation of emulsions with no added diphenol or 4-methylcatechol (12.5, 25, 50 mM) for the different PPO sources is presented in Figure 1. When no diphenol was added to the emulsions, normal biohydrogenation values of 80 to 90% were observed. Increasing amounts of 4-methylcatechol reduced the biohydrogenation of C18:3n-3 substantially. Potato tuber peel extracts resulted in a similar reduction as red clover, however, smaller amounts of 4-methylcatechol were needed to obtain a reduction in biohydrogenation. Also apple extracts resulted in a decrease in biohydrogenation upon higher 4-methylcatechol concentrations, but less intense than for red clover or potato tuber peels. Remarkably, eggplant extracts didn't result in reduced biohydrogenation, so no correlation between PPO activities and biohydrogenation reductions was found.

**Table 1: Protein and emulsion characteristics of 2% (w/v) linseed oil-in-water emulsions prepared using protein extracts from 5 different plant sources used to protect in vitro against ruminal biohydrogenation. These emulsions were either or not treated with different concentrations of 4-methylcatechol to create protein-bound phenol complexes to achieve rumen bypass products**

| Protein source | Protein (g/l) | PPO activity (ΔA/min /mg protein) | D[4,3] (µm) | D[3,2] (µm) | D[v,0. 5] (µm) | D[v,0. 9] (µm) | SSA (m²/g oil) |
|---|---|---|---|---|---|---|---|
| Red clover | 2.19 | 1598 | 2.16 | 1.22 | 1.93 | 4.03 | 5.33 |
| Potato tuber peel | 4.55 | 1822 | 3.29 | 1.70 | 2.63 | 6.67 | 3.81 |
| Apple (Granny Smith) | 0.60 | 995.2 | 3.19 | 2.02 | 2.37 | 6.15 | 3.19 |
| Banana pulp | 0.22 | 751.1 | 3.31 | 2.25 | 2.93 | 6.00 | 2.86 |
| Eggplant | 1.46 | 1394 | 1.83 | 1.63 | 1.74 | 2.69 | 3.97 |

| | | | | | | | |
|---|---|---|---|---|---|---|---|
| D[4,3], volume-weighted mean diameter; D[3,2], surface-weighted mean diameter; D[v,0.5], 50% median volume distribution diameter, meaning 50% of the population shows droplet sizes with a diameter below the value mentioned; D[v,0.9], 90% volume distribution diameter, meaning 90% of the population shows droplet sizes with a diameter below the value mentioned; SSA, specific surface area (m²/g oil) | | | | | | | |

### Example 1 b

### In vitro protection against ruminal degradation of linseed oil-in-water emulsions using PPO-rich protein extracts from 20 different plant sources and four different concentrations of 4-methylcatechol as diphenolic agent

### Materials and Methods

Preparation of emulsions and calculations were comparable to the case in Example 1. Again, a three-step process was performed wherein oil was emulsified using a protein extract before addition of a synthetic diphenol to create protein-phenol complexes in order to obtain protection. A screening test was performed on 20 different raw materials: potato tuber peels (*Solanum tuberosum* L.), pineapple peels and pulp (*Ananas comosus* (L.) Merr.), apple peels (*Malus domestica* Mill cv. *Jonagold* or *Jonagored*), apple pomace (*Malus domestica* Mill cv. *Jonagold* or a mixture of different cultivars) whereby the Jonagold treatment was obtained after oxygen-free pressing, artichoke (*Cynara scolymus* L.), banana peel (*Musa acuminate Colla* AAA group cv. *Grand Nain*), cauliflower leaves, florets and bud waste (= stems and leaves) (*Brassica oleracea* L. convar. *Botrytis* var. *botrytis*), broccoli bud waste *Brassica oleracea* L. convar. *Botrytis* var. *cymosa*), North Sea shrimp (*Crangon crangon* L.), pear pomace obtained after oxygen-free pressing (*Pyrus communis* L. cv *Conference*), tomato leaves and stems (*Solanum lycopersicum* L.), spinach leaves (Spinacia oleracea L.), Belgian endive root peels and root cortex (Cichorium intybus L.) and carrot peels (*Daucus carota* subsp *sativus* (Hoffm.) Schübl & G. Martens).

Protein extracts were used to measure PPO activity and protein content. To determine PPO activity, the absorbance was measured at 400 nm 10, 15, 20, 25, 30, 35, 40, 45, 50, 55 and 60 seconds after addition of 4-methylcatechol as described by Van Ranst et al.⁽⁸⁾. PPO activity was calculated by determining the slope in the linear area with the highest R²-value and expressed as nkatal/mg protein, whereby a standard quinone series was used to calculate a conversion factor to express the increase in absorbance per minute in nkatal. Folin-Ciocalteau reagent was added to the protein extract NaK-tartrate with or without copper and the absorption measured at 750 nm to determine the protein an protein-bound phenol content, expressed as g per liter extract and mg Tyrosine-equivalents per mg protein respectively as described by Winters et al.⁽¹²⁾ Measurements were done in triplicate

Finally, to induce protein-phenol complexing, 10% (v/v) of a 4-methylcatechol solution in distilled water was added to the emulsions to reach a concentration of 9/1 emulsion/diphenol solution. Test emulsions had a final concentration of 0, 10, 20 or 40 mM 4-methylcatechol. Emulsion mixtures were shaken for 24 h at room temperature in order to allow PPO activity before storing in a refrigerator and subsequent incubation to measure the protection against ruminal biohydrogenation.

Efficiency of protection of 18:3n-3 was calculated as [(biohydrogenation of 18:3*n-3*)_{non-protected} - (biohydrogenation of 18:3*n-3*)_{protected}] / (biohydrogenation of 18:3*n-3*)_{non-protected}.

### Results

Protein extract and emulsion characteristics for the tested emulsions are shown in Table 2. Protein concentrations in extracts were highest for potato tuber peels and North Sea shrimp, other plant protein sources showed much lower protein concentrations. Protein-bound phenol content in the extract was exceptionally high for artichoke, reflecting high complexing activity during extraction of protein in contrast to all other protein sources where protein-bound phenol concentrations were generally low. Highest PPO activities, expressed as nkatal per mg protein after addition of 4-methylcatechol as diphenol substrate are highest for artichoke, tomato plant material, pear pomace and potato tuber peels. Apple extracts showed intermediate values of PPO activity, in contrast to all other protein sources which showed low to hardly no PPO activity towards 4-methylcatechol. Emulsion characteristics showed that generally small droplet sizes were found with increasing protein content in the protein extracts.

Percentages of biohydrogenation of C18:3*n-3* after 24 h incubation of emulsions are shown in Table 3. A clear trend is observed between biohydrogenation and 4-methylcatechol concentration: applying increasing concentrations of 4-methylcatechol on linseed oil-in-water emulsions resulted in smaller biohydrogenation values. The increase in substrate concentration was initially reflected in a steep decrease in biohydrogenation, however, once a low biohydrogenation level was reached no further effect was observed when applying higher concentrations of diphenol. Percentages of protection against biohydrogenation for the highest applied diphenol concentration (40 mM 4-methylcatechol) are shown in Figure 2. From this figure it is clear that the highest potential for protection is found for cauliflower florets and leaves, spinach leaves and potato tuber peels. Broccoli and cauliflower wastes (= leaves and stems), artichoke and tomato plant waste (= leaves and stems) material showed intermediate protection values, but all other protein sources resulted in levels of protection lower than 10%.

Remarkably, there is no direct link found between the PPO activity of the extract and the concomitant level of protection against biohydrogenation. This is a striking result as the hypothesis has always been that high PPO activity was a prerequisite to obtain high levels of protection. This can be observed best for cauliflower and spinach which resulted in high levels of protection but showed low PPO activities. Other protein sources like carrot and Belgian endive roots, which showed similar PPO activities as cauliflower and spinach, resulted in hardly any protection. It might be suggested that the presence of PPO in the extracts is necessary to obtain protection, but there is no link between the PPO activity or protein level for different protein sources and the level of protection against ruminal biohydrogenation.

**Table 2: Protein and emulsion characteristics of 2% (w/v) linseed oil-in-water emulsions prepared using protein extracts from 20 different plant sources used to protect in vitro against ruminal biohydrogenation. These emulsions were either or not treated with different concentrations of 4-methylcatechol to create protein-bound phenol complexes to achieve rumen bypass products**

| Protein source | Protein (g/l) | Protein-bound phenols (mg Tyr-eq/mg protein) | PPO activity (nkatal/ mg protein) | D[4,3] (µm) | D[3,2] (µm) | D[v,0. 5] (µm) | D[v,0. 9] (µm) | SSA (m²/g oil) |
|---|---|---|---|---|---|---|---|---|
| Potato tuber peel | 2.81 | 0.257 | 38.4 | 7.76 | 1.63 | 4.97 | 19.6 | 3.97 |
| Pineapple pulp | 0.994 | 0.235 | 1.85 | 8.78 | 4.49 | 8.39 | 15.6 | 1.44 |
| Pineapple peel | 0.714 | 0.589 | 4.72 | N.A. | N.A. | N.A. | N.A. | N.A. |
| Apple peel (Jonagold) | 0.206 | 0.433 | 10.7 | 30.9 | 26.2 | 10.8 | 32.9 | 0.246 |
| Apple peel (Jonagored) | 0.153 | 1.10 | 14.7 | 14.5 | 4.35 | 30.0 | 46.3 | 1.49 |
| Apple pomace (Jonagold) | 0.326 | 0.604 | 9.44 | 4.93 | 1.86 | 2.79 | 11.9 | 3.48 |
| Apple pomace (mixture) | 0.360 | 0666 | 19.4 | 75.5 | 10.4 | 62.5 | 15.2 | 0.620 |
| Artichoke | 0.498 | 9.46 | 292 | 1.62 | 0.526 | 0.633 | 3.93 | 12.3 |
| Banana peel | N.A. | N.A. | N.A. | N.A. | N.A. | N.A. | N.A. | N.A. |
| Cauliflower leaf | 0.572 | 0.646 | 1.57 | 9.10 | 2.46 | 3.54 | 18.2 | 2.63 |
| Cauliflower stems and leaves | 0.813 | 0.334 | 1.65 | 1.99 | 1.28 | 1.79 | 3.64 | 5.06 |
| Cauliflower floret | 1.11 | 0.443 | 0.886 | 1.18 | 0.674 | 0.995 | 2.30 | 9.58 |
| Broccoli waste | 0.706 | 0.375 | 2.77 | 3.23 | 1.93 | 2.50 | 6.54 | 3.35 |
| North Sea shrimp | 2.80 | 0.992 | N.A. | 1.86 | 0.959 | 1.60 | 3.58 | 6.74 |
| Pear pomace (Conference) | 0.997 | 0.407 | 58.0 | 15.0 | 2.49 | 9.78 | 37.5 | 2.63 |
| Spinach leaves | 1.17 | 0.325 | 2.56 | 2.87 | 1.44 | 2.53 | 5.34 | 4.47 |
| Tomato leaves and stems | 0.463 | 0.420 | 56.3 | 7.69 | 3.43 | 7.22 | 14.7 | 1.88 |
| Belgian Endive root cortex | 0.704 | 0.233 | 1.73 | 8.73 | 3.43 | 7.83 | 17.1 | 1.88 |
| Belgian Endive root peel | 0.291 | 0.780 | 3.63 | 12.6 | 2.90 | 11.3 | 25.5 | 2.33 |
| Carrot peel | 0.492 | 0.649 | 2.43 | 7.14 | 3.37 | 6.04 | 14.5 | 1.92 |

| | | | | | | | | |
|---|---|---|---|---|---|---|---|---|
| D[4,3], volume-weighted mean diameter; D[3,2], surface-weighted mean diameter; D[v,0.5], 50% median volume distribution diameter, meaning 50% of the population shows droplet sizes with a diameter below the value mentioned; D[v,0.9], 90% volume distribution diameter, meaning 90% of the population shows droplet sizes with a diameter below the value mentioned; SSA, specific surface area (m²/g oil); N.A., not available | | | | | | | | |

**Table 3: Ruminal biohydrogenation (%) of C18:3n-3 in linseed oil-in-water emulsions using protein extracts from different sources at different concentrations of 4-methylcatechol (0, 10, 20 or 40 mM) as diphenolic agent after 24h in vitro incubation (n=3)**

| Protein source | 0 mM | | 10 mM | | 20 mM | | 40 mM | |
|---|---|---|---|---|---|---|---|---|
| | Mean | SD | Mean | SD | Mean | SD | Mean | SD |
| Potato tuber peel | 96,9 | 0,391 | 32,6 | 1,05 | 23,1 | 0,852 | 14,5 | 0,719 |
| Pineapple pulp | 96.3 | 1.16 | 94.5 | 4.77 | 96.4 | 0.333 | 96.3 | 0.603 |
| Pineapple peel | 95.7 | 0.748 | 97.4 | 0.665 | 96.7 | 0.640 | 96.4 | 0.617 |
| Apple peel (Jonagold) | 97.9 | 0.142 | 97.7 | 0.506 | 96.9 | 0.802 | 95.9 | 0.792 |
| Apple peel (Jonagored) | 97.6 | 0.461 | 97.2 | 0.157 | 97.0 | 0.553 | 96.0 | 0.824 |
| Apple pomace (Jonagold) | 97.6 | 0.572 | 97.1 | 0.316 | 97.3 | 0.593 | 96.6 | 0.970 |
| Apple pomace (mixture) | 97.4 | 0.619 | 75.1 | 39.3 | 97.1 | 0.044 | 96.5 | 0.509 |
| Artichoke | 93.2 | 1.53 | 85.5 | 2.51 | 81.2 | 2.77 | 50.5 | 0.964 |
| Banana peel | 83.9 | 3.59 | 83.6 | 2.41 | 87.1 | 3.60 | 91.5 | 2.08 |
| Cauliflower leaf | 94.4 | 1.65 | 96.1 | 0.562 | 55.0 | 7.85 | 22.7 | 1.25 |
| Cauliflower stems and leaves | 97.3 | 0.304 | 97.3 | 0.408 | 92.2 | 1.31 | 44.2 | 5.71 |
| Cauliflower floret | 96.1 | 0.327 | 90.0 | 0.867 | 40.6 | 3.11 | 9.52 | 0.525 |
| Broccoli waste | 97.7 | 0.513 | 97.2 | 0.610 | 93.9 | 1.07 | 41.3 | 11.4 |
| North Sea shrimp | 96.8 | 0.508 | 96.5 | 0.467 | 96.8 | 1.26 | 96.2 | 1.76 |
| Pear pomace (Conference) | 97.2 | 0.649 | 97.0 | 0.279 | 96.0 | 0.397 | 91.3 | 0.228 |
| Spinach leaves | 95.1 | 0.340 | 94.6 | 1.17 | 55.3 | 7.52 | 10.7 | 0.967 |
| Tomato leaves and stems | 95.9 | 0.730 | 93.7 | 0.548 | 93.6 | 0.909 | 77.6 | 4.94 |
| Belgian Endive root cortex | 90.9 | 2.02 | 96.0 | 0.622 | 95.6 | 0.726 | 91.5 | 1.64 |
| Belgian Endive root peel | 96.5 | 0.685 | 96.2 | 0.680 | 95.6 | 0.799 | 94.0 | 1.20 |
| Carrot peel | 97.2 | 1.41 | 97.7 | 0.514 | 96.7 | 0.498 | 95.3 | 0.390 |

| | | | | | | | | |
|---|---|---|---|---|---|---|---|---|
| SD, standard deviation; % biohydrogenation (BH) was calculated by following formula: % BH = 100*[(C18:3)₀ₕ - (C18:3)₂₄ₕ)] / (C18:3)₀ₕ with C18:3 the ratio of C18:3 on total C18 fatty acids measured before (0h) or after incubation (24h) | | | | | | | | |

### Example 2

### In vitro protection against ruminal degradation of increasing concentrations of linseed oil-in-water emulsions using a PPO-rich protein extract from red clover and different concentrations of 4-methylcatechol as diphenolic agent wherein extra casein as emulsifier was added

### Materials and methods

Preparation of emulsions and calculations were comparable to the case in Example 1. Here, a combination setup was performed to assess the combined effect of oil concentrations, extra casein addition and different diphenolic substrate concentrations. A 4x3x4 factorial design was used to test 4 concentrations of oil (10, 20, 30 and 40 g of linseed oil per liter red clover protein extract), 3 protein concentrations (0, 1 or 2 g extra casein acid hydrolysate per liter emulsion) and 4 diphenol concentrations (to achieve test emulsions with a final concentration of 0, 12.5, 25 or 50 mM 4-methylcatechol). Efficiency of protection of 18:3n-3 was calculated as [(biohydrogenation of 18:3*n-3*)_{non-protected} - (biohydrogenation of 18:3*n-3*)_{protected}] / (biohydrogenation of 18:3*n-3*)_{non-protected}.

Results were analysed using the MIXED procedure of SAS (SAS Enterprise Guide 5.1, SAS Institute Inc., Cary, North Carolina, USA), non-linear regression was done using the NLIN procedure of SAS. Prior to statistical analysis, technical replicates were averaged. Hence, the design didn't allow assessment of all interactions, but did allow assessment of all (*n*-1)-way interactions (with n the number of factors tested). Therefore, following model was used: *Yij* = µ + *Oi* + *Pj* + *Dk* + *Oi* × *Pj* + *Oi* × *Dk* + *Pj* × *Dk* + *εij*, with *Oi* the effect of oil concentration (*i* = 10, 20, 30 or 40 g per liter red clover protein extract), *Pj* the effect of extra protein (*j* =0, 1 or 2 g extra casein per liter emulsion), *Dk* the effect of diphenol concentration in the emulsion (*k* = 0, 12.5, 25 or 50 mM 4-methylcatechol). All mentioned differences were assigned at the 0.05 significance level and differences among least squares means were evaluated using Tukey's multiple comparison test.

### Results

Figure 3 gives an overview of the results. Adding 4-methylcatechol to the emulsions resulted in a decrease in biohydrogenation of C18:3*n*-3 after 24h rumen incubation, with increasing concentrations of 4-methylcatechol resulting in a further reduction of biohydrogenation (p<0.001). PUFA were more extensively hydrogenated when more oil was included in the oil-in-water emulsions (p<0.001). Noteworthy, this increase in biohydrogenation with higher oil concentrations was found within each level of 4-methylcatechol (p<0.001), but largest significant differences in biohydrogenation were found for intermediate concentrations of diphenol. Protecting higher amounts of oil seemed more difficult, as greater amounts of 4-methylcatechol were required to obtain a decreased biohydrogenation and concomitantly increased protection efficiency. Rather unexpectedly, differences in biohydrogenation were also found for casein (p<0.001), independent of the oil concentration (p=0.372), but dependent of diphenol (p=0.029). Adding 1 g of casein per liter protein extract did not result in an increase in biohydrogenation (p=0.947), however, when 2 g of casein per liter protein extract was added, a small but significant increase in biohydrogenation as compared with no casein or 1 g casein per liter was observed (p<0.001). More protein thus resulted in higher levels of biohydrogenation, despite of a reduction in emulsion droplet size (Table 4). Increasing oil concentrations, resulting in more extensive biohydrogenation, were linked with an increase in emulsion droplet size and decrease in specific surface area. Highest protection efficiencies of 0.716 and 0.795 for C18:2*n-6* and C18:3*n-3*, respectively, were found for the lowest oil concentration (10 g oil per liter) and highest 4-methylcatechol concentration (50 mM).

It is suggested that PPO has to be present near to the oil interface to induce crosslinking. Reduction in protection efficiency through addition of casein may be explained within this perspective. Indeed, this observation is in contrast to what was originally expected, as casein was added to supply sufficient emulsifier to reach droplet sizes that were small enough to obtain stable emulsions. When emulsions were passed through the microfluidizer, emulsion droplet sizes decreased, leading to an increase of the oil-in-water surface area. Obviously, such larger surface area demands more emulsifier, which means more protein has to be withdrawn from the continuous phase and incorporated into the interface of the emulsion. Indeed, in dairy emulsions with greater fat content and hence increased specific surface area, an increase in the fraction of adsorbed protein was reported.⁽¹³⁾ However, disordered 'soft' proteins like casein, tend to adsorb more easily to emulsion interfaces than globular 'hard' proteins, because these proteins unfold faster, leading to a faster reduction of the interfacial tension.⁽¹⁴⁾ Enzymes like PPO and other proteins in the red clover extract are typically globular proteins. When red clover 'hard' globular proteins and 'soft' proteins like casein are present simultaneously, casein might be incorporated in the interface to a higher extent than does PPO, due to competitive adsorption.⁽¹⁴⁾ Hence, this negative effect of casein on protection efficiency might indicate that PPO indeed has to be present at the oil interface to create protection.

Furthermore, not only the presence of diphenol and PPO is important to protect against biohydrogenation, also the amount of diphenol plays a role, with greater amounts of diphenol resulting in greater ruminal protection. This may be due to the formation of a denser phenol cross-linked protein layer at the interface, resulting in better protected emulsions. The amount of diphenol required probably depends on the total interfacial surface area in the emulsions, which is reflected in the specific surface area (Table 4). Indeed, it seems more difficult to protect higher amounts of oil against biohydrogenation (Figure 3), probably because of a shortage of diphenols. Hence, in Figure 4, the amount of diphenolic substrate in the emulsions per unit of emulsion interfacial area (mmol 4-methylcatechol/m²) was related to the protection efficiencies of the data. Experimental data points showed a logarithmic increase, reaching a plateau once more than 0.25 mmol 4-MC is available in the system per square meter surface area present in the emulsion. This suggests that protection efficiency against biohydrogenation might be caused by an effective emulsion encapsulation, as protection efficiencies increase with increasing amounts of diphenol substrate per unit emulsion interfacial area.

**Table 4: Protein and emulsion characteristics of linseed oil-in-water emulsions prepared using a red clover protein extract used to protect in vitro against ruminal biohydrogenation. These emulsions were either or not treated with different concentrations of 4-methylcatechol (0, 12.5, 25 or 50 mM) to create protein-bound phenol complexes to achieve rumen bypass products**

| Emulsion treatment | | Protein | PPO | D[4,3] | D[3,2] | D[v,0. | D[v,0. | SSA |
|---|---|---|---|---|---|---|---|---|
| oil^{a} | CAS^{b} | (g/l) | activity (ΔA/min /mg protein) | (µm) | (µm) | 5] (µm) | 9] (µm) | (m²/g oil) |
| 10 | 0 | 4.87 | 403.9 | 0.85 | 0.67 | 0.79 | 1.45 | 9.63 |
| 10 | 1 | 5.87 | 335.1 | 0.61 | 0.47 | 0.53 | 1.06 | 13.7 |
| 10 | 2 | 6.87 | 286.3 | 0.56 | 0.44 | 0.49 | 0.95 | 14.7 |
| 20 | 0 | 4.87 | 403.9 | 1.23 | 1.04 | 1.17 | 1.90 | 6.20 |
| 20 | 1 | 5.87 | 335.1 | 1.08 | 0.77 | 0.94 | 1.88 | 8.38 |
| 20 | 2 | 6.87 | 286.3 | 0.71 | 0.52 | 0.60 | 1.28 | 12.4 |
| 30 | 0 | 4.87 | 403.9 | 1.62 | 1.34 | 1.50 | 2.58 | 4.81 |
| 30 | 1 | 5.87 | 335.1 | 1.43 | 1.04 | 1.25 | 2.50 | 6.20 |
| 30 | 2 | 6.87 | 286.3 | 1.15 | 0.56 | 0.86 | 2.54 | 11.5 |
| 40 | 0 | 4.87 | 403.9 | 1.93 | 1.61 | 1.76 | 3.11 | 4.01 |
| 40 | 1 | 5.87 | 335.1 | 2.24 | 1.54 | 1.82 | 3.95 | 4.19 |
| 40 | 2 | 6.87 | 286.3 | 1.87 | 1.05 | 1.65 | 3.63 | 6.14 |

| | | | | | | | | |
|---|---|---|---|---|---|---|---|---|
| CAS, casein; D[4,3], volume-weighted mean diameter; D[3,2], surface-weighted mean diameter; D[v,0.5], 50% median volume distribution diameter, meaning 50% of the population shows droplet sizes with a diameter below the value mentioned; D[v,0.9], 90% volume distribution diameter, meaning 90% of the population shows droplet sizes with a diameter below the value mentioned; SSA, specific surface area (m²/g oil) ^{a} amount of oil emulsified in g per liter protein extract ^{b} extra amount of casein in g per liter protein extract, added to the continuous phase of the emulsion before emulsification | | | | | | | | |

### Example 3

### In vitro protection against ruminal degradation of linseed oil-in-water emulsions using a PPO-rich protein extract from potato tuber peels and 4-methylcatechol as diphenolic agent with or without bovine serum albumin

### Materials and Methods

To assess the difference between 'soft' and 'hard' proteins as additional emulsifier, bovine serum albumin, as an example of a 'hard' protein was used in the current experiment. From the findings of Example 2 it was suggested that the addition of the 'soft' protein casein outcompetes the 'hard protein' PPO from the oil-water interface, resulting in smaller reduction in biohydrogenation upon addition of 4-methylcatechol. Bovine serum albumin (BSA) was added to PPO containing protein extract to prepare a 10% oil-in-water emulsion of 40.0 mg protein/g oil (as compared to the control which contained 38 mg protein/g oil). Changes in droplet size of the emulsions and biohydrogenation of the protected emulsions were assessed in vitro. Emulsions were prepared as described in Example 1, but a rotor/stator homogenization (instead of the Microfluidizer) was used and emulsions contained 10% instead of 2% oil.

### Results

Addition of BSA significantly decreased the mean droplet size of the original emulsion (6 vs 8 µm) but the difference with the control treatment disappeared after the protection reaction (average droplet size of 8 µm for both emulsions). No difference was observed in the extent of ruminal biohydrogenation, with an average degree of protection of 71%. Addition of limited amounts of hard proteins as e.g. bovine serum albumin did not affect protection against ruminal biohydrogenation, suggesting the deteriorating effect of additional emulsifiers is less in the case of 'hard' as compared to 'soft' proteins such as casein. Nevertheless, the more important finding of the current experiment is the fact that protection efficiencies of 71% were found for emulsions of a droplet size of 8 µm containing 10% oil. This is largely higher than expected based on the results of Example 2 where surface weighed mean diameters of 3 µm or higher reduced protection efficiencies to 35% or less. In contrast to Example 2, potato tuber peels were used as a source of PPO, instead of red clover. This supports the surprising finding of differences in PPO sources for the fate of protecting polyunsaturated fatty acids against ruminal biohydrogenation, which are not linked to PPO (22 µkat/g oil in the current experiment, which is comparable to activity levels measured in Example 2).

### Example 4

### In vitro protection against ruminal degradation of linseed oil-in-water emulsions using a PPO-rich protein extract from red clover and 4-methylcatechol as diphenolic agent wherein the cross-linking reaction is stopped after different times

### Materials and Methods

To assess how long it takes to protect an emulsion against ruminal biohydrogenation upon addition of 4-methylcatechol (0 or 15 mM), time series were considered. Protection of 1.5% (w/v) emulsions was created as described before in Example 1. However, emulsion mixtures were shaken for 0, 0.5, 1, 2, 4, 8 or 24 h at room temperature before addition of 4-hexylresorcinol (4-hexylresorcinol; 50% ethanol solution) and storage in a refrigerator to obtain different levels of protection. It has been shown before that 4-hexylresorcinol is an effective inhibitor of PPO.⁽¹⁵⁾ Emulsions had a final concentration of 3 mM 4-hexylresorcinol.

### Results

Results of fresh incubated emulsions (Table 5), shown in Figure 5, clearly indicates that biohydrogenation of C18:2n-6 and C18:3n-3 is reduced when time between addition of 4-methylcatechol and PPO inhibition increases. During the first two hours, no reduction of biohydrogenation was found, while already after 4h a marked decrease in biohydrogenation was noted. Even greater reductions were found after 8h and 24h, suggesting higher protection against BH is induced when the PPO catalyzed reaction upon 4-methylcatechol addition is allowed to occur longer.

**Table 5: Protein and emulsion characteristics of 1.5% (w/v) linseed oil-in-water emulsions prepared using a red clover protein extract used to protect in vitro against ruminal biohydrogenation. These emulsions were either or not treated with 4-methylcatechol (15mM) to create protein-bound phenol complexes to achieve rumen bypass products**

| Protein (g/l) | PPO activity (ΔA/min /mg protein) | D[4,3] (µm) | D[3,2] (µm) | D[v,0. 5] (µm) | D[v,0. 9] (µm) | SSA (m²/g oil) |
|---|---|---|---|---|---|---|
| 2.07 | 2353 | 1.43 | 1.16 | 1.26 | 2.34 | 5.56 |

| | | | | | | |
|---|---|---|---|---|---|---|
| D[4,3], volume-weighted mean diameter; D[3,2], surface-weighted mean diameter; D[v,0.5], 50% median volume distribution diameter, meaning 50% of the population shows droplet sizes with a diameter below the value mentioned; D[v,0.9], 90% volume distribution diameter, meaning 90% of the population shows droplet sizes with a diameter below the value mentioned; SSA, specific surface area (m²/g oil) | | | | | | |

### Example 5

### In vitro protection against ruminal degradation of fish oil-in-water emulsions using a PPO-rich protein extract from red clover and 4-methylcatechol as diphenolic agent

### Materials and methods

Preparation of emulsions and calculations were comparable to the case in Example 1, however, 2% (w/v) fish oil instead of linseed oil was used in this case. Also, 0, 1 or 2 g/l casein was added as extra emulsifier. Results that are presented are means of emulsions with these three casein levels. As fish oil is particularly rich in long chain fatty acids as C20:5n-3 and C22:6n-3, biohydrogenation was calculated as: [(proportion of C20:5 in total C₂₀ FA)₀ₕ - (proportion of C20:5 in total C₂₀ FA)₂₄ₕ ] / (proportion of C20:5 in total C₂₀ FA)₀ₕ and [(proportion of C22:6 in total C₂₂ FA)₀ₕ - (proportion of C22:6 in total C₂₂ FA)₂₄ₕ ] / (proportion of C22:6 in total C₂₂ FA)₀ₕ for C20:5n-3 and C22:6n-3 respectively.

### Results

Results in Figure 6 show that adding 4-methylcatechol resulted in decreased biohydrogenation for C20:5n-3 and C22:6n-3, similarly as in Example 1. Casein as extra emulsifier reduced the emulsion droplet sizes with concomitant larger specific surface areas (Table 6). Biohydrogenation values of 4-methylcatechol-free emulsions were lower compared to linseed oil emulsions, which is often observed in vitro for C20:5n-3 and C22:6n-3, most notably because of the toxic effect on ruminal metabolism of these long chain PUFA.⁽¹⁶⁾ For comparative reasons, emulsions were also made using only 2 g of casein per liter as emulsifier, so without 4-methylcatechol or red clover protein extract, but this resulted in no differences in biohydrogenation as compared with the 4-methylcatechol-free emulsions with or without red clover. This indicated that both red clover protein extract, containing PPO, and 4-methylcatechol as diphenolic substrate were required to obtain a reduction in biohydrogenation.

**Table 6: Protein and emulsion characteristics of 2% (w/v) fish oil-in-water emulsions prepared using a red clover protein extract used to protect in vitro against ruminal biohydrogenation. These emulsions were either or not treated with 4-methylcatechol (20mM) to create protein-bound phenol complexes to achieve rumen bypass products**

| Extra casein (g/l) | Protein (g/l) | PPO activity (ΔA/min /mg protein) | D[4,3] (µm) | D[3,2] (µm) | D[v,0. 5] (µm) | D[v,0. 9] (µm) | SSA (m²/g oil) |
|---|---|---|---|---|---|---|---|
| 0 | 1.70 | 2486 | 1.43 | 1.21 | 1.31 | 2.24 | 5.33 |
| 1 | 2.70 | 1565 | 0.60 | 0.47 | 0.54 | 1.00 | 13.7 |
| 2 | 3.70 | 1142 | 0.56 | 0.47 | 0.52 | 0.88 | 13.7 |

| | | | | | | | |
|---|---|---|---|---|---|---|---|
| D[4,3], volume-weighted mean diameter; D[3,2], surface-weighted mean diameter; D[v,0.5], 50% median volume distribution diameter, meaning 50% of the population shows droplet sizes with a diameter below the value mentioned; D[v,0.9], 90% volume distribution diameter, meaning 90% of the population shows droplet sizes with a diameter below the value mentioned; SSA, specific surface area (m²/g oil) | | | | | | | |

### Example 6

### In vitro protection against ruminal degradation of linseed oil-in-water emulsions using a PPO-rich protein extract from red clover and different sources of diphenolic agent

### Materials and Methods

In the former examples, use is made of the synthetic PPO substrate 4-methylcatechol. However, 4-methylcatechol is quite expensive and a more widely available and natural substrate may be preferred. For these reasons, various (di)phenolic substrates are screened. Identified diphenols present in sidestreams of the agro- and food industry are used in a screening assay in which PPO activity is monitored spectrophotometrically. Similarly, this assay is applied to screen (di)phenolic additives which are used in the food industry, e.g. vanillin, ethylvanillin, eugenol, propylgalate (E310), tert-butyl-hydrochinon (E319). Also other synthetic diphenols as caffeic acid or chlorogenic acid are used. (Di)phenols showing a high affinity for PPO (comparable to 4-methylcatechol) are selected and their potential to create protected emulsions is assessed *in vitro*, as described in Example 1.

### Example 7

### In vitro protection against ruminal degradation of linseed oil-in-water emulsions using a PPO-rich protein extract from red clover and 4-methylcatechol as diphenolic agent wherein the continuous phase of emulsions was removed

### Materials and Methods

Preparation of emulsions and calculations were comparable to the case in Example 1: again 2% (w/v) linseed oil-in-water emulsions were made using red clover protein to which 4-methylcatechol (0, 12.5, 25 or 50 mM) was added to create protection against ruminal degradation. Before incubation, emulsions were either stored in a refrigerator or washed: The hypothesis is that protection is created at the emulsion interface, making the fatty acids inside the protected core inaccessible for ruminal microbes and enzymes to be degraded, however, it cannot be excluded that the continuous phase has an influence on the protection. Quinones can not only be created at the interface, but also quinones and the resulting polymers are formed in the continuous phase, as not all protein (including PPO) is adsorbed at the oil-water interface. Therefore, after protection was created upon addition of 4-methylcatechol, the continuous phase was removed by centrifugation, the remaining oil droplets taken off and resolubilized in water (based on which we called it 'washed emulsions') by vigorously shaking. This process was done twice to be sure that almost all quinones and polymers of the continuous phase were removed

### Results

Figure 7 shows the results of this experiment. No differences in biohydrogenation of C18:3n-3 between the fresh and washed emulsions were observed (similar results are found for n-6 C18:2, the other major PUFA in linseed oil). Addition of only the lowest amount of 4-methylcatechol already resulted in a steep decrease in biohydrogenation, meaning large protection against ruminal breakdown was observed. Fresh and washed emulsions showed a similar droplet size distribution profile, meaning emulsions remained stable after resolubilization, and the original fresh versus washed emulsions could be compared with each other (results not shown). According to Figure 7 'washed' emulsions showed a similar biohydrogenation profile upon 4-methylcatechol addition compared to the original 'fresh' emulsions, meaning the continuous phase of the protected emulsions can be removed without loss of protection. Accordingly, the 'ballast' continuous phase can easily be removed by centrifugation, to obtain a concentrated wet product. The hypothesis was confirmed: removing the continuous phase, containing quinones and protein-phenol polymers, had no influence on the level of protection. This supports the hypothesis that protection happens at the oil-water interface.

### Example 8

### In vivo protection against ruminal degradation of conjugated linoleic acid rich oil-in-water emulsions using a PPO-rich protein extract from potato tuber peels and 4-methylcatechol as diphenolic agent

### Materials and Methods

Eight dairy cows in mid-lactation (100 to 220 days in milk, 562 to 712 kg live weight, minimum daily production of 20 to 25 kg milk) were used in a sequential set-up to test the in vivo protection of fatty acids and transfer to the milk. Two supplements were tested: First, a protected fatty acid emulsion, prepared according to Example 1, was administered (n=4). This product consisted of a protein extract from potato tuber peels, which was further used to emulsify a commercially available triacylglyceride mixture of cis-9, trans-11 and trans-10, cis-12 conjugated linoleic acid (t10c12-CLA) (Tonalin™ TG80, BASF-AG, Ludwigshafen, Germany) and protected against rumen degradation through the creation of protein-phenol complexes by addition of 4-methylcatechol. The degree of rumen bypass of t10c12 CLA was assessed in vitro as described in Example 1 before the start of the in vivo trial. Second, a commercially available rumen-protected product containing a methyl ester mixture of the same fatty acids was tested as a positive control (Lutrell Combi, BASF-AG, Ludwigshafen, Germany) (n=4). Cows received either one of these two supplements and were administered in such amounts to deliver 7 g of t10c12-CLA per day per cow.

The t10c12-CLA is a potent inhibitor of milk fat synthesis ⁽¹⁷⁾ even when administered at limited doses of 5 to 10 g per day, but only when it is transferred to the mammary gland which requires absorption in the small intestine and protection against rumen biohydrogenation. Indeed, former experiments in our group using a non-protected t10c12-CLA supplement (95 % in vitro biohydrogenation of trans-10, cis-12 CLA, using the same in vitro procedure as described here ⁽¹⁸⁾), did not depress milk fat concentrations. Accordingly, monitoring of a simple characteristic, i.e. milk fat content, provided an overall idea of rumen protection, post-ruminal absorption and transfer to the mammary gland. Moreover, registration of milk t10c12-CLA secretion allowed the calculation of the transfer efficiency from diet to milk of t10c12-CLA. Comparison of the latter with transfer efficiencies of the non-protected supplement, could give an idea the ruminal protection and intestinal absorption efficiency⁽¹⁷⁾. Transfer efficiency of dietary trans-10, cis-12 conjugated linoleic acid to the milk when administering this non-protected supplement amounted 1.5% (Fievez et al., unpublished results). The choice of this fatty acid supplement allowed experiments with dairy cattle as only minor amounts were required to induce significant responses as compared with e.g. C18:3n-3 rich supplements, which are traditionally supplemented at a 10- to 20-fold higher rate to reach C18:3n-3 enriched milk.

The experimental period consisted of six weeks. The first three weeks were used as adaptation period, in which cows were adapted to a basal diet consisting of roughage (60% maize silage and 40% grass silage) fed ad libitum, soybean meal, Covasoy (high percentage of rumen-protected protein) and concentrate to meet individual requirements, which was fed throughout the whole experimental period. In week four, milk was sampled as a control, before week five in which cows were supplemented the test product for five consecutive days, immediately followed by five wash-out days in week 6. An overview of the experimental period is given in Table 7. Milk fat content was determined by Fourier Transform Infrared analysis (FTIR Delta Instruments, Drachten, The Netherlands) and fatty acids determined as described by Jorjong et al.⁽¹⁹⁾ Milk fat is presented as percentage of the total mass of milk produced per day and t10c12-CLA as g per 100 g of fatty acids detected.

**Table 7: Overview of the experimental treatments during the different weeks of the in vivo experiment**

| Week 1 | Week 2 | Week 3 | Week 4 | Week 5 | Week 6 |
|---|---|---|---|---|---|
| Adaptation | Adaptation | Adaptation | Control | Treatment | Wash-out |
| | | | 2 days of milk sampling: | 5 days of milk sampling: | 5 days of milk sampling: |
| | | | Day -4 / -3 | Davy 1/2/3/4/5 | Day 6/7/8/9/10 |
| | | | No supplement | * Lutrell Combi (n=4) | No supplement |
| | | | | * PPO emulsion (n=4) | |

### Results

Results for proportions of t10c12-CLA in milk fat are presented in Figure 8. Milk sampled in the control week shows very low to negligible levels of t10c12-CLA in milk. Ones cows start to receive the supplement, containing protected t10c12-CLA, an increase in this particular fatty acid is detected in the milk: concentrations increase until about 0.045 g per 100 g of detected fatty acids when Lutrell Combi was supplied, versus 0.030 g per 100 g of detected fatty acids when the protected PPO emulsion was administered. In our former experiment, supplementation of the non-protected t10c12-CLA⁽¹⁸⁾, resulted in concentrations in milk of the latter fatty acid of 0.010 g per 100 g of detected fatty acids. In the current experiment, a faster increase in milk t10c12-CLA was observed for Lutrell Combi compared with the PPO emulsion. During the wash-out period, concentrations of t10c12-CLA diminished to negligible values. These results show that supplementing Lutrell Combi resulted in higher t10c12-CLA levels in milk as compared with protected PPO emulsions. Nevertheless, comparison with the non-supplemented control period in the current experiment and with supplementation of a non-protected t10c12-CLA supplement revealed a significant increase in milk t10c12-CLA both for Lutrell Combi as well as the PPO product.

Transfer efficiencies of t10c12-CLA to the milk are presented in Figure 9. Daily, 7 g of dietary t10c12-CLA was supplied per cow, of which up to 5 % is transferred to the milk (Figure 8). Similar transfer efficiencies have been reported before for protected CLA products (2.9⁽²⁰⁾, 5.7⁽²¹⁾, 4.8⁽²²⁾ and 9.3⁽²³⁾ %). In our former experiment, supplementation of the non-protected t10c12-CLA⁽¹⁸⁾, resulted in transfer efficiencies of 1.5%. Transfer efficiencies of the Lutrell Combi showed a fast increase in t10c12-CLA transfer efficiency upon supplementation, whereas a more gradual increase was observed for the PPO emulsion. At the end of the supplementation period, transfer efficiencies of the PPO emulsion were about 65% of those obtained by Lutrell Combi. A possible explanation for the delayed increase in case of PPO emulsion might be related to variation in rumen protection among the different batches of the PPO product, with batches administered in the beginning of the week showing lower in vitro protection efficiencies as compared with the batches given at the end of the week (figures presented at the bottom of Figure 9).

As suggested by de Veth et al.⁽¹⁷⁾, t10c12-CLA is a potent inhibitor of milk fat synthesis if sufficient amounts of this fatty acids are transferred to the mammary gland. Therefore, an increase in t10c12-CLA transfer efficiency and concentration in the milk should be reflected in the milk fat content upon supplementation. Results for percentage of milk fat are presented in Figure 10. Indeed, a small but significant decrease is observed for both Lutrell Combi as the PPO product upon supplementation. Similarly to the delayed transfer efficiencies presented in Figure 9, a delayed decrease in milk fat percentage is observed for the PPO product as compared with Lutrell Combi. During the wash-out period, a gradual increase to the original level of milk fat percentage is observed.

Finally, it can be confirmed that fatty acids are protected against ruminal breakdown, absorbed post-ruminally and transferred to the mammary gland for both the claimed PPO product as well as the positive control Lutrell Combi, as increasing concentration of t10c12-CLA were observed in milk fat, resulting in decreased concentrations of milk fat.

### Example 9

### Protection against oxidation during storage of linseed oil-in-water emulsions using a PPO-rich protein extract from red clover and 4-methylcatechol as diphenolic agent

### Materials and Methods

In this experiment, emulsions with or without red clover, and with or without 4-methylcatechol, were treated to induce oxidation. Two emulsions were made: an emulsion with red clover protein extract and 2 mg/ml casein on the one hand (RC+CAS) and an emulsion containing only 2 mg/ml casein on the other hand (CAS). Thirty g of linseed oil was emulsified per liter.

Using SPME-GC/MS (Solid Phase Micro-Extraction - Gas Chromatography/Mass Spectroscopy) volatile components, formed during oxidation of unsaturated fatty acids, are measured. The analysis is based on the method as described by Jelen et al.⁽⁹⁾ Volatiles were extracted from the headspace of the emulsions using a carboxen-polydimethylsiloxane (CAR/PDMS) fiber (85 µm thickness) (Supelco, Bellefonte, Pennsylvania, USA). For this, 3 g of emulsion, put in a 10 ml vial, were incubated in a heating block for 45 min at 35°C. Extracted volatiles were analyzed using a gas chromatograph (Agilent model 6890N) coupled to a mass-selective detector (Agilent model 5973, Agilent Technologies, Diegem, Belgium). Compounds were resolved on a HP-5 column (30 m x 250 µm x 1 µm, 5% phenyl methyl siloxane, Agilent Technologies, Diegem, Belgium), at an inlet temperature of 280°C. Hydrogen flow was 1.1 ml/min and the temperature program was as follows: 40°C for 3 min; increased at 8°C/min to 280°C. N-alkanes were run under the same conditions to calculate the Kovats index (KI) values for the compounds. Compounds were identified by comparing their mass spectra with those contained in the NIST05 mass spectral library and by comparison of KI with those reported by Jelen et al.⁽⁹⁾ Samples were analyzed in duplicate and results for the major volatile oxidation product of interest were provided in arbitrary area units (AAUx10⁶).

All results were analysed using the MIXED procedure of SAS (SAS Enterprise Guide 5.1, SAS Institute Inc., Cary, North Carolina, USA). Prior to statistical analysis, technical replicates were averaged. Hence, the design didn't allow assessment of all interactions, but did allow assessment of all (*n*-1)-way interactions (with n the number of factors tested). Following statistical model was used: *Yij* = µ + *Pi* + *Dj* + *Sk* + *Pi* × *Dj* + *Sk* × *Dj* + *εij,* with *Pi* the effect of protein (*i* = red clover extract with extra casein (RC+CAS) or casein only (CAS)), *Dj* the effect of diphenol concentration in the emulsion (*j* = 0 or 20 mM 4-methylcatechol) and *Sk* the effect of storage time (*k* = 1, 2, 4 or 6 days). The interaction effect *Pi* × *Sk* was left out of the model, as this effect turned out to be non-significant in each case. All mentioned differences were assigned at the 0.05 significance level and differences among least squares means were evaluated using Tukey's multiple comparison test.

### Results

Results from SPME-GC/MS gave a detailed image of the oxidation products formed. Results from SPME-GC/MS of the emulsions after 1, 2, 4 and 6 days of exposure to oxidation, together with the mean values over the different storage time points, showing a detailed image of major end products of fat oxidation, are given in Table 8. Generally, all volatile oxidation products in RC+CAS emulsions were decreased upon addition of 4-MC. Values for hexanal were considerably higher in emulsions with the RC extract as compared with emulsions containing casein only. Significant differences between CAS emulsions and CAS emulsions with 4-MC for 2-pentenal and 3,5-octadien-2-one were observed, which might suggest an anti-oxidative action of 4-MC. Remarkably, only in the latter case, without red clover extract, 3-methylphenol was detected. Remarkably, this compound was not found in the RC+CAS emulsion containing 4-methylcatechol, but only in the CAS emulsion containing 4-methylcatechol. This may indicate that 4-methylcatechol disappeared in the red clover emulsions, most probably due to the formation of a protein-phenol complex, induced by PPO. The fact that 4-methylcatechol is not present anymore in a free form, might be a proof of evidence that 4-methylcatechol is bound to other molecules like proteins, resulting in reduced oxidation.

**Table 8: Major volatile compounds in PUFA rich emulsions (expressed in arbitrary area units * 10⁶), measured using SPME-GC/MS, generally increase after 1, 2, 4 or 6 days at 50°C, but are reduced when 4-methylcatechol is added. Emulsions are made with red clover protein extract and 2 g/l casein (RC+CAS) or 2 g/l casein only (CAS), with or without the presence of 20 mM 4-methylcatechol and contain 30 g/l linseed oil after passing 5 times through a microfluidizer at 25 MPa**

| protein | 4-MC addition | storage time (days) | hexanal | 2-penten al | 2,4-hexadie nal | 3.5-octadie n-2-one | 3-methylphenol |
|---|---|---|---|---|---|---|---|
| RC+CAS | no | 1 | 22.9 | 1.89 | 1.61 | 9.89 | 0.000 |
| | | 2 | 77.3 | 3.59 | 4.23 | 21.7 | 0.000 |
| | | 4 | 125 | 5.96 | 7.74 | 35.9 | 0.000 |
| | | 6 | 176 | 15.0 | 24.7 | 75.2 | 0.000 |
| | | *mean* | *100^{a}* | *6.61^{a}* | *9.58* | *35.7^{a}* | *0.000^{a}* |
| | yes | 1 | 7.51 | 4.31 | 1.26 | 3.08 | 0.000 |
| | | 2 | 9.78 | 3.15 | 1.09 | 3.56 | 0.000 |
| | | 4 | 11.1 | 2.29 | 1.20 | 4.58 | 0.000 |
| | | 6 | 11.8 | 2.01 | 1.35 | 6.70 | 0.000 |
| | | *mean* | *10.1^{b}* | *2.94^{b}* | *1.23* | *4.48^{b,c}* | *0.000^{a}* |
| CAS | no | 1 | 2.42 | 2.26 | 0.265 | 4.11 | 0.000 |
| | | 2 | 11.7 | 2.05 | 0.500 | 5.44 | 0.000 |
| | | 4 | 35.5 | 4.78 | 1.16 | 14.7 | 0.000 |
| | | 6 | 143 | 15.9 | 4.77 | 27.6 | 0.000 |
| | | *mean* | *48.3^{b}* | *6.26^{a}* | *1.68* | *13.0^{a,c}* | *0.000^{a}* |
| | yes | 1 | 4.04 | 0.925 | 0.000 | 0.000 | 21.5 |
| | | 2 | 6.23 | 2.72 | 0.148 | 0.000 | 29.0 |
| | | 4 | 7.36 | 1.99 | 0.186 | 0.000 | 27.7 |
| | | 6 | 10.7 | 3.76 | 0.230 | 0.000 | 28.4 |
| | | *mean* | *7.09^{b}* | *2.35^{b}* | *0.143* | *0.000^{b}* | *26.6^{b}* |
| | | | | | | | |
| SEM | | | 7.87 | 0.607 | 2.46 | 6.53 | 0.872 |
| | | | | | | | |
| *statistics* | | | | | | | |
| protein | | | 0.013 | NS | NS | 0.067 | <0.001 |
| diphenol | | | <0.001 | 0.001 | 0.076 | 0.008 | <0.001 |
| storage time | | | 0.002 | 0.001 | NS | NS | NS |
| protein × diphenol | | | 0.021 | NS | NS | NS | <0.001 |
| diphenol × storage time* | | | 0.003 | 0.001 | NS | NS | NS |

| | | | | | | | |
|---|---|---|---|---|---|---|---|
| 4-MC, 4-methylcatechol; RC, red clover; CAS, casein; SEM, standard error of the mean; NS, non-significant at p≥0.10 ^{a,b,c,d} indicates differences within columns between treatment means at p≤0.05 * if the two-way factor diphenol × storage time was not significant, it was omitted from the model | | | | | | | |

### Example 10

### Protection against pre-ingestive oxidation during storage of alpha-tocopherol containing oil-in-water emulsions using a PPO-rich protein extract from potato tuber peels and 4-methylcatechol as diphenolic agent

### Materials and Methods

It was tested whether emulsions containing alpha-tocopherol (vitamin E) could withstand pre-ingestive oxidation during storage. Therefore, emulsions containing 1.8% oil with high concentrations of trans-10, cis-9 conjugated linoleic acid as triacylglyceride (Tonalin™ TG80, BASF-AG, Ludwigshafen, Germany) and 0.2 % vitamin E (T3251, (±)-α-Tocopherol, Sigma-Aldrich, Diegem, Belgium) were made as described in Example 1. Emulsions were prepared with a final 4-methylcatechol concentration of 0 and 20 mM. To induce oxidation, emulsions were put on a shaker in a ventilated oven at 50°C for about 16h before vitamin E analysis⁽²⁴⁾. Results are expressed as µg of vitamin E per ml emulsion.

### Results

Results are presented in Table 9. A decrease in vitamin E is observed both in the presence or not of 4-methylcatechol. Nevertheless, this decrease is substantially lower if 4-methylcatechol is present in the emulsion. Simultaneously, fatty acids in these emulsion are also protected against in vitro ruminal biohydrogenation (77.5 % protection efficiency). Also, vitamin E in emulsions without 4-methylcatechol could easily be separated using a mild hexane extraction, while this wasn't the case when 4-methylcatechol was present, indicating vitamin E is indeed present within the emulsions (and not in the continuous phase as for the emulsions without 4-methylcatechol). In conclusion, this demonstrates that vitamin E in emulsions created using potato tuber peels, rich in PPO, and treated with 4-methylcatechol are protected against pre-ingestive damage during storage.

**Table 9: Oxidation of α-tocopherol is observed after 16h of induced oxidation at 50°C for emulsion containing 1.8% of Tonalin™ TG80 oil, 0.2% α-tocopherol and 0 mM 4-methylcatechol (prepared using a potato tuber peel protein extract), but is reduced when 20 mM 4-methylcatechol is present in the emulsion (n=2)**

| 4-methylcatechol (mM) | Temperature induced oxidation? | Vitamin E (µg/ml) | S.D. (µg/ml) | %decrease (compared to control) |
|---|---|---|---|---|
| 0 | No | 49.47 | 20.28 | |
| | Yes | 20.82 | 5.05 | 58.0 |
| 20 | No | 34.74 | 1.63 | |
| | yes | 25.42 | 0.69 | 26.8 |

### References

1. Scott TW, Cook LJ & Mills SC (1971) Protection of Dietary Polyunsaturated Fatty Acids Against Microbial Hydrogenation in Ruminants. Journal of the American Oil Chemists Society 48, 358-&.
2. Jenkins TC & Bridges WC (2007) Protection of fatty acids against ruminal biohydrogenation in cattle. Eur J Lipid Sci Technol 109, 778-89.
3. Kitessa SM, Gulati SK, Simos GC, Ashes JR, Scott TW, Fleck E & Wynn PC (2004) Supplementation of grazing dairy cows with rumen-protected tuna oil enriches milk fat with n-3 fatty acids without affecting milk production or sensory characteristics. Br J Nutr 91, 271-7.
4. Sterk A, Vlaeminck B, van Vuuren AM, Hendriks WH & Dijkstra J (2012) Effects of feeding different linseed sources on omasal fatty acid flows and fatty acid profiles of plasma and milk fat in lactating dairy cows. J Dairy Sci 95, 3149-65.
5. Robinson PH, Swanepoel N, Shinzato I & Juchem SO (2011) Productive responses of lactating dairy cattle to supplementing high levels of ruminally protected lysine using a rumen protection technology. Animal Feed Science and Technology 168, 30-41.
6. Dehkordi SK, Vlaeminck B, Hostens M, Opsomer G & Fievez V (2008) In vitro rumen biohydrogenation of trans-10, cis-12 conjugated linoleic acid in a lipid-encapsulated (LE-CLA) supplement incorporated or not in a processing pellet. Commun Agric Appl Biol Sci 73, 119-22.
7. Van Ranst G, Lee MRF & Fievez V (2011) Red clover polyphenol oxidase and lipid metabolism. Animal 5, 512-21.
8. Van Ranst G, Fievez V, De Riek J & Van Bockstaele E (2009) Influence of ensiling forages at different dry matters and silage additives on lipid metabolism and fatty acid composition. Anim Feed Sci Technol 150, 62-74.
9. Jelen HH, Mildner-Szkudlarz S, Jasinska I & Wasowicz E (2007) A headspace-SPME-MS method for monitoring rapeseed oil autoxidation. J Am Oil Chem Soc 84, 509-17.
10. Hassim HA, Lourenco M, Goel G, Vlaeminck B, Goh YM & Fievez V (2010) Effect of different inclusion levels of oil palm fronds on in vitro rumen fermentation pattern, fatty acid metabolism and apparent biohydrogenation of linoleic and linolenic acid. Anim Feed Sci Technol 162, 155-8.
11. Castro-Montoya J, De Campeneere S, Van Ranst G & Fievez V (2012) Interactions between methane mitigation additives and basal substrates on in vitro methane and VFA production. Anim Feed Sci Technol 176, 47-60.
12. Winters AL & Minchin FR (2005) Modification of the Lowry assay to measure proteins and phenols in covalently bound complexes. Analytical Biochemistry 346, 43-8.
13. Tomas A, Paquet D, Courthaudon JL & Lorient D (1994) Effect of Fat and Protein Contents on Droplet Size and Surface Protein Coverage in Dairy Emulsions. Journal of Dairy Science 77, 413-7.
14. Dickinson E (1999) Adsorbed protein layers at fluid interfaces: interactions, structure and surface rheology. Colloids Surf, B 15, 161-76.
15. Arias E, Gonzalez J, Peiro JM, Oria R & Lopez-Buesa P (2007) Browning prevention by ascorbic acid and 4-hexylresorcinol: Different mechanisms of action on polyphenol oxidase in the presence and in the absence of substrates. J Food Sci 72, 464-70.
16. Maia MRG, Chaudhary LC, Figueres L & Wallace RJ (2007) Metabolism of polyunsaturated fatty acids and their toxicity to the microflora of the rumen. Anton Leeuw Int J G 91, 303-14.
17. de Veth MJ, Gulati SK, Luchini ND & Bauman DE (2005) Comparison of calcium salts and formaldehyde-protected conjugated linoleic acid in inducing milk fat depression. Journal of Dairy Science 88, 1685-93.
18. Dehkordi, S.K., Vlaeminck, B., Hostens, M., Opsomer, G. & Fievez, V. 2008. In vitro rumen biohydrogenation of trans-10, cis-12 conjugated linoleic acid in a lipid-encapsulated (LE-CLA) supplement incorporated or not in a processing pellet. Communications in Agricultural and Applied Biological Sciences, 73(1), 119-123.
19. Jorjong S, van Knegsel ATM, Verwaeren J, Lahoz MV, Bruckmaier RM, De Baets B, Kemp B & Fievez V (2014) Milk fatty acids as possible biomarkers to early diagnose elevated concentrations of blood plasma nonesterified fatty acids in dairy cows. Journal of Dairy Science 97, 7054-64.
20. de Veth, M. J., van Straalen, W., Koch, W., Keller, T., Hayler, R., Pfeiffer, A.-M., 2005. Effect of CLA dose on milk production in early lactation dairy cows. J. Dairy Sci. 88, Suppl.1, 220.
21. Castañeda-Gutiérrez, E., de Veth, M. J., Lock, A. L., Dwyer, D. A., Murphy, K. D., Bauman, D. E., 2007. Effect of supplementation with calcium salts of fish oil on n-3 fatty acids in milk fat. J. Dairy Sci. 90, 4149-4156.
22. Schwarz, F.J., Lierman, T., Mocker, P., Pfeiffer, A.-M., Jahreis, G., 2009. Performance, metabolic parameters and fatty acid composition of milk fat due to dietary CLA and rumen protected fat of dairy cows. Book of abstracts No. 15 of the 60th annual meeting of the European Association for Animal Production, 24-27 August 2009, Barcelona, Spain, 351.
23. Moallem, U., Lehrer, H., Zachut, M., Livhitz, L., and Yacoby, S. 2010. Production performance and pattern of milk fat depression of high-yielding dairy cows supplemented with encapsulated linoleic acid. Animal 4, 641-652.
24. Pastsart U, De Boever M, Claeys E & De Smet S (2013) Effect of muscle and post-mortem rate of pH and temperature fall on antioxidant enzyme activities in beef. Meat Science 93, 681-6.
25. Lee, Tweed, Cookson and Sullivan (2009) Immunogold labelling to localize polyphenol oxidase (PPO) during wilting of red clover leaf tissue and the effect of removing cellular matrices on PPO protection of glycerol-based lipid in the rumen. J Sci Food Agric 90, 503-510.

## Claims

1. A method to protect a lipophilic nutrient against ruminal degradation comprising:
- preparing a solution of emulsifying proteins wherein part of said proteins have polyphenol oxidase activity,
- adding said lipophilic nutrient to said solution of emulsifying proteins,
- emulsifying said lipophilic nutrient within said protein solution to obtain a stable oil in water emulsion, and
- adding an amount of diphenol to said emulsion in the presence of molecular oxygen, wherein said emulsifying proteins are extracted from plants, or parts thereof, chosen from the list of the following species: Solanum tuberosum, Solanum lycopersicum, Cynara scolymus, Spinacia oleracea and Brassica species.

2. A method according to claim 1 wherein said diphenol is added before said stable oil in water emulsion is obtained.

3. A method according to claims 1-2 wherein said plants or parts thereof are potato tuber peels, tomato plant stems and/or leaves, cauliflower stems, leaves and florets and spinach leaves.

4. A method according to claims 1-3 wherein said lipophilic nutrient is an oil or a fat soluble vitamin.

5. A method according to claim 4 wherein said oil is an oil comprising polyunsaturated fatty acids or wherein said vitamin is vitamin A, vitamin D or vitamin E.

6. A method according to claim 5 wherein said oil comprising polyunsaturated fatty acids is linseed oil, fish oil or an oil comprised of glycerides containing conjugated linoleic acid.

7. A method according to claims 1-6 wherein said diphenol is 4-methylcatechol.

8. A method according to claims 1-7 wherein said amount of diphenol is minimum 0.25 mmol per m² of interfacial surface area of the droplets within said oil in water emulsion .

9. A method according to claims 1-8 to protect a lipophilic nutrient against deterioration due to oxidation.

10. A method according to claims 1-9 wherein said solution of emulsifying proteins should not be supplemented with casein or any other protein competing with polyphenol oxidases when adsorbing to the oil-water interface.

11. An emulsion comprising diphenol-protected lipophilic nutrients obtainable by a method according to claims 1-10.

12. Feed comprising an emulsion according to claim 11.

13. Use of an emulsion according to claim 11 or feed according to claim 12 to increase the total amount of a lipophilic nutrient in a ruminant or in a ruminant's product when compared to amount found in an animal which was not fed with said emulsion or feed.

## Patentansprüche

1. Verfahren zum Schützen eines lipophilen Nährstoffs gegen Abbau im Pansen, umfassend Folgendes:
- Herstellen einer Lösung von emulgierenden Proteinen, wobei ein Teil dieser Proteine Polyphenoloxidaseaktivität aufweist,
- Zugeben des lipophilen Nährstoffs zu der Lösung von emulgierenden Proteinen,
- Emulgieren des lipophilen Nährstoffs in der Proteinlösung, um zu einer stabilen Öl-in-Wasser-Emulsion zu gelangen, und
- Zugeben einer Menge an Diphenol zu der Emulsion in Gegenwart von molekularem Sauerstoff,
wobei die emulgierenden Proteine aus Pflanzen oder Teilen davon, ausgewählt aus der Liste der folgenden Arten, extrahiert sind: Solanum tuberosum, Solanum lycopersicum, Cynara scolymus, Spinacia oleracea und Brassica-Arten.

2. Verfahren nach Anspruch 1, wobei das Diphenol zugegeben wird, bevor man zu der stabilen Öl-in-Wasser-Emulsion gelangt.

3. Verfahren nach den Ansprüchen 1-2, wobei es sich bei den Pflanzen oder Teilen davon um Kartoffelknollenschalen, Tomatenpflanzenstengel und/oder -blätter, Blumenkohlstengel, -blätter und -röschen und Spinatblätter handelt.

4. Verfahren nach den Ansprüchen 1-3, wobei es sich bei dem lipophilen Nährstoff um ein öl- oder fettlösliches Vitamin handelt.

5. Verfahren nach Anspruch 4, wobei es sich bei dem Öl um ein Öl umfassend mehrfach ungesättigte Fettsäuren handelt oder wobei es sich bei dem Vitamin um Vitamin A, Vitamin D oder Vitamin E handelt.

6. Verfahren nach Anspruch 5, wobei es sich bei dem Öl umfassend mehrfach ungesättigte Fettsäuren um Leinsamenöl, Fischöl oder ein Öl bestehend aus Glyceriden, die konjugierte Linolsäure enthalten, handelt.

7. Verfahren nach den Ansprüchen 1-6, wobei es sich bei dem Diphenol um 4-Methylcatechol handelt.

8. Verfahren nach den Ansprüchen 1-7, wobei die Menge an Diphenol mindestens 0,25 mmol pro m² Grenzflächenoberfläche der Tröpfchen in der Öl-in-Wasser-Emulsion beträgt.

9. Verfahren nach den Ansprüchen 1-8 zum Schützen eines lipophilen Nährstoffs gegen oxidationsbedingten Verderb.

10. Verfahren nach den Ansprüchen 1-9, wobei die Lösung von emulgierenden Proteinen nicht mit Casein oder einem sonstigen Protein, das beim Adsorbieren an die Öl-Wasser-Grenzfläche mit Polyphenoloxidasen konkurriert, ergänzt werden soll.

11. Emulsion, umfassend diphenolgeschützte lipophile Nährstoffe, erhältlich durch ein Verfahren nach den Ansprüchen 1-10.

12. Futtermittel, umfassend eine Emulsion nach Anspruch 11.

13. Verwendung einer Emulsion nach Anspruch 11 oder eines Futtermittels nach Anspruch 12, um die Gesamtmenge an einem lipophilen Nährstoff in einem Wiederkäuer oder Wiederkäuerprodukt im Vergleich zu der Menge, die sich in einem Tier findet, dem diese Emulsion oder das Futtermittel nicht dargeboten wurde, zu erhöhen.

## Revendications

1. Méthode de protection d'un nutriment lipophile contre une dégradation ruminale, comprenant :
- la préparation d'une solution de protéines émulsifiantes, où une partie desdites protéines possède une activité de polyphénol oxydase ;
- l'addition dudit nutriment lipophile à ladite solution de protéines émulsifiantes ;
- l'émulsification dudit nutriment lipophile au sein de ladite solution de protéines, afin d'obtenir une émulsion huile-dans-eau stable ; et
- l'addition d'une quantité de diphénol à ladite émulsion en présence d'oxygène moléculaire ;
où lesdites protéines émulsifiantes sont extraites à partir de plantes, ou de parties de celles-ci, choisies dans la liste constituée par les espèces suivantes : *Solanum tuberosum, Solanum lycopersicum, Cynara scolymus, Spinacia oleracea* et les espèces de *Brassica.*

2. Méthode selon la revendication 1, dans laquelle ledit diphénol est ajouté avant l'obtention de ladite émulsion huile-dans-eau stable.

3. Méthode selon les revendications 1-2, dans laquelle lesdites plantes ou parties de celles-ci sont des épluchures de tubercules de pomme de terre, des tiges et/ou des feuilles de plantes de tomate, des tiges, des feuilles et des fleurons de chou-fleur, et des feuilles d'épinard.

4. Méthode selon les revendications 1-3, dans laquelle ledit nutriment lipophile est une huile ou une vitamine liposoluble.

5. Méthode selon la revendication 4, dans laquelle ladite huile est une huile comprenant des acides gras polyinsaturés ou où ladite vitamine est la vitamine A, la vitamine D ou la vitamine E.

6. Méthode selon la revendication 5, dans laquelle ladite huile comprenant des acides gras polyinsaturés est une huile de lin, une huile de poisson, ou une huile comprenant des glycérides contenant de l'acide linoléique conjugué.

7. Méthode selon les revendications 1-6, dans laquelle ledit diphénol est le 4-méthylcatéchol.

8. Méthode selon les revendications 1-7, dans laquelle ladite quantité de diphénol est d'un minimum de 0,25 mmol par m² de surface interfaciale des gouttelettes au sein de ladite émulsion huile-dans-eau.

9. Méthode selon les revendications 1-8, destinée à protéger un nutriment lipophile contre une détérioration due à une oxydation.

10. Méthode selon les revendications 1-9, dans laquelle ladite solution de protéines émulsifiantes ne doit pas être complémentée par de la caséine ou toute autre protéine en compétition avec les polyphénol oxydases lors d'une adsorption à l'interface huile-eau.

11. Emulsion comprenant des nutriments lipophiles protégés par du diphénol, pouvant être obtenue par une méthode selon les revendications 1-10.

12. Aliment pour animaux comprenant une émulsion selon la revendication 11.

13. Utilisation d'une émulsion selon la revendication 11, ou de l'aliment pour animaux selon la revendication 12, afin d'augmenter la quantité totale d'un nutriment lipophile chez un ruminant ou dans un produit issu d'un ruminant, par rapport à la quantité trouvée chez un animal n'ayant pas été nourri avec ladite émulsion ou ledit aliment pour animaux.
